(19) Europäisches Patentamt / European Patent Office / Office européen des brevets

(11) **EP 3 790 718 B1**

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **19756360.4**

(22) Anmeldetag: **20.08.2019**

(51) Internationale Patentklassifikation (IPC):
**B29B 7/84** *(2006.01)*    **B29B 7/86** *(2006.01)*
**B29B 7/48** *(2006.01)*    **B29B 7/60** *(2006.01)*
**B29B 7/72** *(2006.01)*    **B29B 7/82** *(2006.01)*
**B29C 48/29** *(2019.01)*    **B29C 48/285** *(2019.01)*
**B29C 48/425** *(2019.01)*    **B29C 48/44** *(2019.01)*
**C08G 18/00** *(2006.01)*    **C09J 175/04** *(2006.01)*
**B29C 48/07** *(2019.01)*    **B29C 48/08** *(2019.01)*
**B29C 48/09** *(2019.01)*    **C08G 18/08** *(2006.01)*
**C08G 18/22** *(2006.01)*    **C08G 18/32** *(2006.01)*
**C08G 18/65** *(2006.01)*    **C08G 18/69** *(2006.01)*
**C08G 18/75** *(2006.01)*

(52) Gemeinsame Patentklassifikation (CPC):
**B29B 7/485; B29B 7/487; B29B 7/488;**
**B29B 7/603; B29B 7/726; B29B 7/823;**
**B29B 7/826; B29B 7/845; B29B 7/86; B29C 48/07;**
**B29C 48/08; B29C 48/09; B29C 48/29;**
**B29C 48/297; B29C 48/425;**    (Forts.)

(86) Internationale Anmeldenummer:
**PCT/EP2019/072299**

(87) Internationale Veröffentlichungsnummer:
**WO 2020/038961 (27.02.2020 Gazette 2020/09)**

(54) **VERFAHREN ZUR HERSTELLUNG EINES HAFTKLEBRIGEN KLEBSTOFFS UNTER VERWENDUNG EINES ERSTEN PLANETWALZENEXTRUDERS UND EINES STROMAB ANGEORDNETEN ZWEITEN ENTGASUNGSPLANETENWALZENEXTRUDERS**

METHOD FOR PRODUCING AN ADHESIVE GLUE USING A FIRST PLANETARY ROLLER EXTRUDER AND A SECOND DEGASSING PLANETARY ROLLER EXTRUDER ARRANGED DOWNSTREAM

PROCÉDÉ DE PRODUCTION D'UN ADHÉSIF SENSIBLE À LA PRESSION À L'AIDE D'UNE PREMIÈRE EXTRUDEUSE PLANÉTAIRE ET D'UNE SECONDE EXTRUDEUSE PLANÉTAIRE DE DÉGAZAGE AGENCÉE EN AVAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2018 DE 102018214231**
                   **13.12.2018 DE 102018221589**

(43) Veröffentlichungstag der Anmeldung:
**17.03.2021 Patentblatt 2021/11**

(73) Patentinhaber: **tesa SE**
**22848 Norderstedt (DE)**

(72) Erfinder:
• **DIETZ, Bernd**
  **22949 Ammersbek (DE)**
• **MASSOW, Klaus**
  **22393 Hamburg (DE)**

(74) Vertreter: **tesa SE**
**Hugo-Kirchberg-Straße 1**
**22848 Norderstedt (DE)**

(56) Entgegenhaltungen:
**EP-A1- 0 588 008**      **WO-A1-2018/059930**
**WO-A1-2018/059931**    **WO-A1-2018/153935**

EP 3 790 718 B1

DE-A1- 102008 004 388    DE-A1- 102010 025 995
DE-A1- 102010 062 669    DE-A1- 102012 212 883
DE-A1- 102013 224 774

(52)  Gemeinsame Patentklassifikation (CPC): (Forts.)
      **B29C 48/44; C08G 18/003; C08G 18/0895;**
      **C08G 18/227; C08G 18/3206; C08G 18/6588;**
      **C08G 18/69; C08G 18/758; C09J 175/04;**
      C08G 2170/40

**Beschreibung**

Die vorliegende Erfindung betrifft ein Verfahren zur Herstellung eines insbesondere thermisch vulkanisierbaren, schmelzbaren, vorzugsweise haftklebrigen Klebstoffs sowie eines Klebebandes mit dem thermisch vulkanisierbaren Klebstoff.

Viele Aggregate zur kontinuierlichen Herstellung und Verarbeitung von lösemittelfreien und/oder thermisch vernetzbaren Polymersystemen sind bekannt. Zumeist finden Schneckenmaschinen wie Einschnecken-, Doppelschnecken- oder Planetwalzenextruder unterschiedlichster Verfahrenslänge und Bestückung Verwendung. Es werden aber auch kontinuierlich arbeitende Kneter verschiedenster Bauart, zum Beispiel auch Kombinationen aus Knetern und Schneckenmaschinen, für diese Aufgabe eingesetzt.

Extruder (Einschnecken- und Doppelschneckenextruder, Planetwalzenextruder, Ringextruder) finden insbesondere zur Kunststoffverarbeitung Anwendung. Dabei wird der Kunststoff in der Regel in Form eines Granulates eingesetzt und durch den Extruder plastifiziert und über eine Düse ausgetragen, die den plastifizierten Kunststoff in eine gewünschte Form bringt.

In der Kunststoffverarbeitung wird unter Plastifizierung das Umwandeln von pulverförmigen oder granulatförmigen Kunststoffen durch Temperatur und Druck verstanden, also eine Erniedrigung der Viskosität des Materials. Hierbei werden in Verarbeitungsmaschinen wie zum Beispiel den Extrudern die Kunststoffe über ihre spezifischen Schmelztemperaturen erhitzt, so dass sie eine heiße, homogene Kunststoffmasse bilden. Ist der Kunststoff dann plastifiziert, kann er im weiteren Prozess zu zum Beispiel Rohren, Platten, Folien oder Spritzgussteilen ausgeformt werden. Auch ein Beschichten auf einen Untergrund wie ein Trägermaterial ist so möglich.

Daneben bezeichnet man als Plastifikation das Zusetzen von Weichmachern (Plastifizier-, Plastifizierungs-, Plastifikationsmittel, Plastifikatoren) zu Kunststoffen, also chemische Substanzen, die die mechanischen Eigenschaften, zum Beispiel die Elastizität des Materials, beeinflussen.

Über das Plastifizieren hinaus ist die Aufgabe des Extruders, die Schmelze zu homogenisieren. Zumeist müssen Additive und Zuschläge in die Kunststoffmatrix eingearbeitet werden. In diesem Fall hat der Extruder die Aufgabe, Zuschläge und Additive gleichmäßig zu verteilen.

Planetwalzenextruder fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit unter anderem auch auf Compoundierprozesse erweitert, die eine besonders temperaturkontrollierte Fahrweise erfordern.

Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 mm.

Für die Verarbeitung von Kunststoffen haben Planetwalzenextruder in der Regel einen Füllteil und einen Compoundierteil.

Das Füllteil besteht aus einer Förderschnecke, auf die die zu plastifizierenden Polymere sowie gegebenenfalls zumindest ein Teil weiterer Feststoffkomponenten kontinuierlich dosiert werden. Die Förderschnecke übergibt das Material dann dem Compoundierteil. Innerhalb des Compoundierteils können bei Bedarf weitere Feststoffe zugegeben werden, was vorzugsweise über Seitenschneckendosierer erfolgt, die das Material über Öffnungen im Mantel der Walzenzylinder in den Planetwalzenextruder hineinbefördern und den Austritt der bereits plastifizierten Polymere verhindern.

Die Zugabe flüssiger Rezepturkomponenten erfolgt in der Regel nicht über das Füllteil des Planetwalzenextruders, sondern erst stromab im Compoundierteil, da die Flüssigkeiten häufig den Plastifizierungsprozess der Polymeren ungünstig beeinflussen. Die Zugabe der Flüssigkomponenten kann dabei über Öffnungen zwischen den Walzenzylindern oder über eine spezielle Bohrung im Mantel eines Walzenzylinders erfolgen.

Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird.

Das Compoundierteil besteht aus einer angetriebenen Zentralspindel und mehreren Planetenspindeln, die innerhalb eines oder mehrerer Walzenzylinder mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses.

Das umgebende Gehäuse hat in zeitgemäßer Ausbildung einen Doppelmantel. Der Innenmantel wird durch eine Buchse, die mit der Innenverzahnung versehen ist, gebildet. Zwischen Innen- und Außenmantel ist die wichtige Kühlung des Planetwalzenextruders vorgesehen.

Die Planetenspindeln bedürfen keiner Führung in Umfangsrichtung. Durch die Verzahnung ist gewährleistet, dass der Abstand der Planetenspindeln in Umfangsrichtung gleich bleibt. Es kann von einer Eigenführung gesprochen werden.

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

Planetwalzenextruder haben im Verhältnis zu den anderen genannten Extrudern eine extrem große Plastifizierungswirkung. Dies eröffnet die Möglichkeit, Rohstoffe zu bearbeiten, die in den anderen Extrudern gar nicht oder nur mangelhaft einsetzbar sind. Planetwalzenextruder können aber auch genutzt werden, um die Produktionsleistung erheblich zu erhöhen.

Alle Extruder haben das Problem, dass in der Schmelze gasförmige Bestandteile auftreten können, die unerwünscht sind oder die im weiteren Verarbeitungsprozess die Qualität des herzustellenden Produkts negativ beeinflussen.

Solche Bestandteile können zum Beispiel Wasser, Luft oder (Rest-)Lösungsmittel sein. Einige Polymere- beziehungsweise Füllstoffe nehmen Wasser auf. Entweder müssen diese Polymere oder Füllstoffe vorgetrocknet werden, oder aber der im Extruder entstehende Dampf muss abgezogen werden.

Insbesondere pulverförmige Schüttgüter können durch ihre große Oberfläche und zusätzlich oftmals geringe Schüttdichte teilweise große Luftmengen in den Compoundierprozess einbringen. Auch hier muss in den meisten Fällen eine Entgasung erfolgen, um die gewünschte Produktqualität zu erzielen.

Gasförmige Bestandteile, die am Anfang erwünscht und im weiteren Verarbeitungsvorgang unerwünscht sind, können organische Lösungsmittel, Wasser, Luft, Reaktionsbeschleuniger oder Reaktionsinhibitoren beziehungsweise inerte Gase wie beispielsweise Stickstoff, Argon oder Kohlendioxid sein. Soweit kein vollständiger chemischer Umsatz dieser Gase erfolgt, verbleiben Rückstände mit monomeren, oligomeren Abbauprodukten und Zersetzungsprodukten.

Der Anteil an flüchtigen flüssigen Bestandteilen in plastifizierten Polymeren kann häufig bis zu 3 bis 4 Gew.-% betragen, darf aber in extrudierten Polymeren meist nicht mehr als 0,1 Gew.-% betragen.

Es gibt verschiedene Gründe, die zur Entgasung zwingen.

Dazu gehören:

- Verbesserung der Produktqualität
- Vermeidung gesundheitlicher Schädigung
- Verringerung der Kosten
- Verhindern eines chemischen Abbaus
- Durchführung weiterer Verfahrensschritte

Zum Entgasen werden unterschiedliche Geräte angeboten. Zumeist wird die Entgasung am Extruder vorgenommen. Zunächst wird dazu am Extruder eine Entgasungszone definiert, die sich in der Regel am Ende der Verfahrenslänge unmittelbar vor Austritt der Polymere aus dem Extruder befindet. Nachteilig bei dieser Entgasungsposition ist, dass auch leicht verdampfbare flüssige Komponenten, die eigentlich in definierter Menge in den Polymeren verbleiben sollen, wie beispielsweise Vernetzer, Plastifizierungsmittel usw., in undefinierter Weise den Polymeren durch das ungewollte Verdampfen entzogen werden können.

Zum Entgasen werden diverse Lösungen angeboten. Alle Lösungen basieren darauf, dass die in der Schmelze gelösten flüchtigen Bestandteile durch Druckreduzierung frei werden. Der Druckabfall kann auf Umgebungsdruck oder auf einen darunter liegenden Druck erfolgen. Zwangsläufig löst sich das Gas dann aus der Schmelze. Die Gasblasen können dann abgezogen werden.

Als Gasabzug eignet sich bereits eine im Bereich des Druckabfalles vorgesehene Öffnung am Mantel/Gehäuse des Extruders, die wahlweise an eine Saugleitung angeschlossen ist. Bei Kaskadenextruderanlagen findet die Entgasung zumeist zwischen dem Primärextruder und dem Sekundärextruder statt.

Im Betrieb zeigt sich, dass die Entgasungszone eine relativ sensible Zone ist. Hier gilt es, eine möglichst optimale Trennung von Gas und Polymerschmelze zu erreichen sowie ein Austreten der plastifizierten Materialien zu verhindern.

Bekannt ist, dass die Entgasung im Planetwalzenextruder im Bereich der Anlaufringe stattfindet. Die Entgasung an dieser Position ist aber nur für einige wenige Materialien ausreichend effektiv: Materialien mit höheren Viskositäten, wie es sich bei den meisten plastifizierten Polymeren handelt, können zumeist nicht, oder nicht in der gewünschten Weise und Vollständigkeit entgast werden, da es häufig nach kürzester Zeit zu einem Dichtsetzen der Entgasungsöffnung mit Material kommt, was dann sogar zu einem vollständigen Verlust der Entgasungsfähigkeit führen kann.

Planetwalzenextruder sind in Modulbauweise aus einzelnen Walzenzylindern zusammengesetzt. Jedes Modul besteht aus einer allen Modulen gemeinsamen Zentralspindel, um die Zentralspindel umlaufenden Planetenspindeln und einem Gehäuse. Anzahl und Art der Planetenspindeln können in jedem Modul unterschiedlich sein und der speziellen Verfahrensaufgabe des Moduls angepasst sein. Die Gehäuse der Module sind an den Enden mit Flanschen versehen, über die die Module miteinander gekoppelt werden können. Die Stirnflächen der Module sind über Zwischenringe miteinander verbunden, die es in unterschiedlichen Ausführungen gibt. So gibt es beispielsweise Zwischenringe, die den freien Querschnitt am Ende eines Walzenzylinder verringern und so die Verweilzeit in dem stromaufwärtigen Walzenzylinder beeinflussen und somit Einfluss beispielsweise auf den Dispergierprozess nehmen können. Es gibt weiterhin Ausführungsformen von Zwischenringen, die die Fördercharakteristik des Materials innerhalb des Planetwalzenextruders nicht beeinflussen.

Für eine Entgasung in einem Planetwalzenextruder werden die Zwischenringe so gewählt, dass sie an gewünschter Entgasungsstelle über mindestens eine radiale Bohrung verfügen, über die die gasförmigen Bestandteile entweichen können.

Eine Variante zur Entgasung schlägt gemäß der DE 198 56 235 A1 vor, die Schmelze allein oder zusätzlich rückwärts zu entgasen. Die Rückwärtsentgasung erfolgt dadurch, dass ein Gasabzug erfolgt, bevor in der Kompressionszone des Füllteils eine den Gasdurchtritt verhindernde Materialverdichtung stattfindet. Je nach Abstand der den Gasdurchtritt verhindernden Materialverdichtung kann die Rückwärtsentgasung zum Beispiel in Einzugsrichtung des Materials bis 80 cm Abstand von dem Materialeinzug aufweisen.

Die Rückwärtsentgasung schließt auch ein, dass frei werdendes Gas durch den Materialeinzug zurückströmt oder die Rückwärtsentgasung an dem Extruder in axialer Richtung und Förderrichtung vor der Aufgabe des Einsatzmateriales stattfindet.

Vorzugsweise erfolgt die Rückwärtsentgasung im Rahmen einer mehrstufigen Entgasung und bildet die Rückwärtsentgasung im Bereich der Aufgabe des Einsatzmaterials den ersten Entgasungsschritt, in dem insbesondere Luft abgezogen wird.

Für die Rückwärtsentgasung ist von Vorteil, wenn der Extruder in dem Bereich der Gasführung als Planetwalzenextruderabschnitt ausgebildet ist. Der Planetwalzenextruderabschnitt bietet zwischen den umlaufenen Planetenspindeln besonders günstige Gasdurchtritte.

Für die Entgasung kann ausreichend sein, wenn lediglich Öffnungen vorhanden sind, durch welche das Gas beziehungsweise eingezogene Luft entweichen kann. Die Entgasung kann aber auch durch Anlegen eines Saugzuges verstärkt werden.

Dennoch zeigt sich, dass die bekannten Entgasungsverfahren nicht ausreichend sind, den Gasgehalt in den Polymerschmelzen auf sehr niedrige Werte zu reduzieren.

So ist es bisher nicht möglich, thermisch vernetzbare Polymere so in einem Planetwalzenextruder herzustellen, dass aus dem Planetwalzenextruder eine sehr reaktive, oftmals hochviskose Masse ausreichend entgast ausgetragen werden kann, die erst zu einem späteren Zeitpunkt vernetzt werden kann.

Die Compoundierung und Entgasung von Klebmassen mit thermischen Vernetzern ist durch die Prozesstemperaturen limitiert. Hier ist insbesondere der Aufbau mit Compoundier-PWE und nachfolgendem Doppelschneckenextruder, kurz DSE genannt, zu nennen. Die Kühlwirkung des DSE ist stark beschränkt, typischerweise erfolgt ein zusätzlicher Energieeintrag und somit eine Temperaturerhöhung in diesem Aggregat.

Aus der DE 10 2008 004 388 A1 ist eine insbesondere druckempfindliche Klebemasse bekannt, die expandierte Mikroballons enthält, wobei die Klebkraft der die expandierten Mikroballons enthaltende Klebemasse im Vergleich zu der Klebkraft einer flächengewichts- und rezepturidentischen Klebemasse, die durch die Zerstörung der durch die expandierten Mikroballons entstandenen Hohlräume entschäumt ist, um höchstens 30% reduziert ist. Zur Herstellung können als Mischaggregate verschiedene Extruder eingesetzt werden, unter anderem auch ein Planetwalzenextruder.

Aus der DE 10 2010 062 669 A1 ist ein Verfahren bekannt, bei dem zwei Mischaggregate in Reihe geschaltet sind. Es wird offenbart, dass sich als Mischaggregate insbesondere Extruder; wie Doppelschneckenextruder und/oder Planetwalzenextruder eignen. Es wird somit eine Kombination von zwei Planetwalzenextrudern beschrieben, wobei nicht offenbart wird, ob diese Extruder entgasen.

In der DE 10 2013 224 774 A1 und der DE 10 2012 212 883 A1 ist ebenfalls jeweils kein Verfahren offenbart, bei dem auf einen ersten Planetwalzenextruder, in dem nicht entgast wird, und bei dem auf einen stromab angeordneten zweiten Entgasungsplanetwalzenextruder zurückgegriffen wird.

Aufgabe der Erfindung ist es, ein Verfahren zur Herstellung eines vorzugsweise haftklebrigen Klebstoffs bereitzustellen, der thermisch innerhalb eines Temperaturbereichs von 130 °C bis 230 °C und bei prozesstechnisch limitierten Verweilzeiten vulkanisierbar ist, so dass dieser in der Automobilindustrie sowohl im Rohbau auf geölten Blechen als auch in der Lackierstraße auf KTL-beschichteten oder anderweitig lackierten Blechen zum Kleben und/ oder Dichten verwendet werden können, zum Beispiel zur Bördelfalzklebung, zur Bördelfalzabdichtung, zur Nahtabdichtung, zur Unterfütterungsklebung, zum Lochverschluss und vieles mehr.

Gelöst wird diese Aufgabe durch ein Verfahren zur Herstellung eines insbesondere thermisch vulkanisierbaren, schmelzbaren, vorzugsweise haftklebrigen Klebstoffs unter Verwendung eines ersten Planetwalzenextruders und eines stromab angeordneten zweiten Entgasungsplanetwalzenextruders, wie es im Hauptanspruch dargelegt ist. Gegenstand der Unteransprüche sind vorteilhafte Ausführungen des Erfindungsgegenstandes.

Demgemäß betrifft die Erfindung ein Verfahren nach Anspruch 1 zur Herstellung eines insbesondere thermisch vulkanisierbaren, schmelzbaren, vorzugsweise haftklebrigen Klebstoffs unter Verwendung eines ersten Planetwalzenextruders und eines stromab angeordneten zweiten Entgasungsplanetwalzenextruders, wobei

a) der erste Planetwalzenextruder aus einer atmosphärisch betriebenen Füll- und Dispergierzone aus mindestens einem Walzenzylinder besteht,

b) die die thermisch vulkanisierbaren, schmelzbaren, vorzugsweise haftklebrigen Klebstoff bildenden Polymere dem Planetwalzenextruder in einem plastifizierten Zustand zugeführt werden,

c) die plastifizierten Polymere in den mindestens einen Walzenzylinder der Füll- und Dispergierzone eingespeist werden, und zwar innerhalb des ersten Drittels des Walzenzylinders,

d) stromab der Zugabe von den plastifizierten Polymeren in der Füll- und Dispergierzone den plastifizierten Polymeren, insbesondere mit Hilfe eines Seitenschnecken-Dosierers, über eine Öffnung des mindestens einen Walzenzylinders Feststoffe wie thermische Vernetzer zugegeben werden,

e) die Feststoffe in der Füll- und Dispergierzone in den plastifizierten Polymeren dispergiert werden,

f) die Feststoffe zumindest thermische Vernetzer enthalten, die die plastifizierten Polymere zum Zwecke eines Molmassenanstiegs der Polymere vernetzen können,

g) die Vorlauftemperaturen der Zentralspindel und des mindestens einen Walzenzylinders innerhalb der Füll- und Dispergierzone so eingestellt sind, dass es zu keiner Vergelung der mit den thermischen Vernetzern abgemischten plastifizierten Polymeren kommt,

h) die Mischung aus plastifizierten Polymeren und Feststoffen, bevorzugt thermischen Vernetzern, einem zweiten Entgasungsplanetwalzenextruders zugeführt wird, weiter vorzugsweise inline,

i) der zweite Entgasungsplanetwalzenextruder aus einer Entgasungszone aus mindestens einem Walzenzylinder besteht,

j) die Mischung aus plastifizierten Polymeren und Feststoffen, bevorzugt thermischen Vernetzern in dem Entgasungsplanetwalzenextruder entgast wird,

k) die entgaste Mischung aus plastifizierten Polymeren und Feststoffen, bevorzugt thermischen Vernetzern einem Beschichtungsaggregat zugeführt wird, weiter vorzugsweise inline, das heißt ohne zwischenzeitliches Abfüllen oder Umfüllen mit nachfolgendem Wiederaufschmelzen. Weiter vorzugsweise erfolgt das Zuführen zum Beschichtungsaggregat ohne weitere zusätzliche Aufbereitung.

Als Dispergierung oder Dispergieren bezeichnet man einen Verfahrensschritt bei der Herstellung von Formulierungen, wie sie unter anderem bei Lacken, Druckfarben, Kunststoffen oder Pigmentpräparationen üblich sind. Es wird eine Dispersion hergestellt, also eine feste Phase in einer flüssigen verteilt. Neben der gleichmäßigen Verteilung in der flüssigen Phase umschreibt die Dispergierung auch die Benetzung des zu dispergierenden Feststoffes mit der flüssigen Phase sowie die Zerkleinerung des zu dispergierenden Feststoffes.

Unter einem Vakuum wird erfindungsgemäß ein Druck von kleiner als 300 mbar, vorzugsweise 200 mbar, weiter vorzugsweise ein Druck von kleiner 100 mbar verstanden.

Gemäß einer weiteren bevorzugten Ausführungsform der Erfindung ist stromauf vor dem ersten Planetwalzenextruder ein Einschnecken-Förderteil vorgesehen, das eine atmosphärische Rückwärtsentgasung ermöglicht.

In das Einschnecken-Förderteil können gegebenenfalls auch nicht-plastifizierte Polymere aufgegeben werden, die vor dem Eintritt in den mindestens einen Walzenzylinder der Füll- und Dispergierzone plastifiziert sind.

Die Einspeisung der plastifizierten Polymere in den ersten Planetwalzenextruder erfolgt durch zumindest eine Öffnung in der Wandung des mindestens einen Walzenzylinders, und zwar innerhalb des ersten Drittels der Füll- und Dispergierzone.

Alternativ kann die Einspeisung der plastifizierten Polymere in den ersten Planetwalzenextruder über einen Zwischenring erfolgen, der sich zwischen dem Einschnecken-Förderteil und erstem Walzenzylinder befindet und der zum Zwecke der Einspeisung der plastifizierten Polymere über mindestens eine radiale Bohrung verfügt.

Die Zugabe der Feststoffe, vorzugsweise die Zugabe der die Feststoffe bildenden thermischen Vernetzer, Kalk oder $TiO_2$ erfolgt vorteilhaft innerhalb der ersten Zweidrittel, vorzugsweise innerhalb der ersten Hälfte der Füll- und Dispergierzone.

Über die Zugabeöffnung für die Feststoffe können neben den thermischen Vernetzern weitere Feststoffe wie Farbstoffe, Farbpigmente oder weitere, die Polymere modifizierende Füllstoffe zugegeben werden.

Der Wärmeaustausch in den Planetwalzenextrudern erfolgt vorzugsweise über die Zentralspindel und/oder die Walzenzylinder, die dazu über Heiz-/Kühlgeräte mit Temperiermedium betrieben werden.

Um eine große Bandbreite an Rezepturen fahren sowie die Eigenschaften der Polymerisate gezielt einstellen zu können, ist eine flexible Temperaturführung notwendig; daher ist es vorteilhaft, für die Zentralspindel und die Walzenzylinder separate Temperierkreise einzusetzen und die Walzenzylinder gegebenenfalls zudem mit mehr als einem Temperierkreis auszurüsten.

Als Temperiermedium wird aus thermodynamischen Gründen Wasser beziehungsweise Druckwasser bevorzugt, das Verfahren ist aber nicht hierauf beschränkt.

Gemäß einer weiteren bevorzugten Variante der Erfindung verfügt jeder Walzenzylinder in der Entgasungszone über mindestens einen Kreis zur Flüssigtemperierung. Mit diesen wird ein abfallender Temperaturgradient bei der Walzenzylindertemperierung eingestellt, durch den ein Vergelen der thermisch sensitiven Polymere verhindert wird.

Vorzugsweise erfolgt die Einspeisung der plastifizierten Polymere in den ersten Planetwalzenextruder mittels eines Einschnecken-Förderteils, mittels einer Schmelzepumpe, mittels eines Ein- oder Mehrwellenextruders oder mittels einer Fass- oder Tankschmelzeinheit.

Weiter vorzugsweise erfolgt der Austritt der thermisch sensitiven Polymermischung aus dem ersten Planetwalzenextruder mittels einer am Ende des letzten Walzenzylinderbereiches gekoppelten Schmelzepumpe.

Gemäß einer bevorzugten Variante besteht der Walzenzylinderbereich der Entgasungszone aus mindestens zwei, weiter vorzugsweise genau drei oder genau vier gekoppelten Walzenzylindern, die insbesondere über verzahnte Zwischenringe miteinander verbunden sind und die jeweils über mindestens eine Öffnung im Mantel verfügen, über die die mit den Feststoffen, insbesondere den thermischen Vernetzern abgemischten plastifizierten Polymere mit Hilfe von Vakuum von Luft und gegebenenfalls weiteren flüchtigen Substanzen befreit werden können.

Die Walzenzylinderöffnungen der mindestens zwei die Entgasungszone bildenden Walzenzylinders sind vorteilhafterweise jeweils mit einem Produktniederhaltewerk ausgestattet, das einen Austritt der plastifizierten Polymere aus dem Planetwalzenextruder verhindert, wobei das Produktniederhaltewerk vorzugsweise als kämmendes Doppelschneckenpaar ausgeführt ist, über dessen freie Flanken den thermisch sensitiven Polymeren Luft sowie gegebenenfalls weitere flüchtige Bestandteile unter dem Einfluss von Wärme und Vakuum entzogen werden.

Bei der bevorzugten Variante des Entgasungsplanetwalzenextruders mit drei oder vier gekoppelten Walzenzylindern erfolgt die Einspeisung der mit den Feststoffen, insbesondere den thermischen Vernetzern abgemischten plastifizierten Polymeren in den zweiten Walzenzylinder.

Der zweite Walzenzylinder ist dann insbesondere vom evakuierten Teil des Entgasungsplanetwalzenextruders mittels entsprechend ausgeführter Zwischenringe vakuumfest abgetrennt.

Neben der Entgasung findet in dem Entgasungsplanetwalzenextruder eine Compoundierung statt.

Weiter vorzugsweise werden die Planetenspindeln des mindestens einen Walzenzylinders der Füll- und Dispergierzone sowie die Planetenspindeln des mindestens einen Walzenzylinders der sich stromab befindlichen Entgasungszone über jeweils eine gemeinsame Zentralspindel angetrieben.

Weiter vorzugsweise sind der mindestens eine Walzenzylinder, insbesondere alle Walzenzylinder der Füll- und Dispergierzone mit einer Anzahl von Planetenspindeln bestückt, die mehr als 70 %, vorzugsweise mehr als 80 % der maximal möglichen Planetspindelanzahl ausmacht.

Die maximal mögliche Planetspindelanzahl ist eine prozesstechnische Größe. Ab einer gewissen Anzahl von Planetspindeln ist keine Veränderung des Prozesses mehr feststellbar. Die maximal mögliche Planetspindelanzahl entspricht der Anzahl an Planetspindeln, bis zu der ein Einfluss jeder einzelnen auf den Prozess nachweisbar ist.

Im Extremfall führt eine Erhöhung der maximal möglichen Planetspindelanzahl sogar zu einer Verschlechterung der Prozessführung.

Weiter vorzugsweise sind der mindestens eine Walzenzylinder, insbesondere alle Walzenzylinder der Entgasungszone mit einer Anzahl von Planetenspindeln bestückt, die weniger als 75 %, vorzugsweise weniger als 60 % der maximal möglichen Planetspindelanzahl ausmacht.

Gemäß einer besonders bevorzugten Variante sind die beiden vorstehenden Merkmale für alle Walzenzylinder gleichzeitig erfüllt.

Weiter vorzugsweise ist das Beschichtungsaggregat ein Kalander oder eine Düse, durch den beziehungsweise durch die die thermisch sensitive Polymermischung auf ein Trägermaterial aufgebracht wird.

Erfindungsgemäß wird vorgeschlagen, die Beschichtung der bevorzugt hergestellten Klebemassen mit einem Mehrwalzenauftragswerk durchzuführen. Dies können Auftragswerke bestehend aus mindestens zwei Walzen mit mindestens einem Walzenspalt bis zu fünf Walzen mit drei Walzenspalten sein.

Denkbar sind auch Beschichtungswerke wie Kalander (I,F,L-Kalander), so dass die bevorzugte Klebemasse beim Durchgang durch einen oder mehrere Walzenspalte auf die gewünschte Dicke ausgeformt wird.

Um das Übergabeverhalten der ausgeformten Masseschicht von einer auf eine andere Walze zu verbessern, können weiterhin antiadhäsiv ausgerüstete Walzen oder Rasterwalzen zum Einsatz kommen. Um einen hinreichend präzise ausgeformten Klebstofffilm zu erzeugen können die Umfangsgeschwindigkeiten der Walzen Differenzen aufweisen.

Das bevorzugte 4-Walzenauftragswerk wird gebildet von einer Dosierwalze, einer Rakelwalze, die die Dicke der Schicht auf dem Trägermaterial bestimmt und die parallel zur Dosierwalze angeordnet ist, und einer Übertragungswalze, die sich unterhalb der Dosierwalze befindet. Auf der Auflegewalze, die zusammen mit der Übertragungswalze einen zweiten Walzenspalt bildet, werden die Masse und das bahnförmige Material zusammengeführt.

Je nach Art des zu beschichtenden bahnförmigen Trägermaterials kann die Beschichtung im Gleichlauf- oder Gegenlaufverfahren erfolgen.

Das ebenfalls bevorzugte 2-Walzenauftragswerk wird gebildet von einer Dosierwalze und einer feststehenden oder nur sehr langsam drehenden Rakelwalze. Die Dicke der Schicht auf dem Trägermaterial wird durch den eingestellten Spalt zwischen den beiden Walzen bestimmt.

Das Ausformaggregat kann auch durch einen Spalt gebildet werden, der sich zwischen einer Walze und einem feststehenden Rakel ergibt.

Das feststehende Rakel kann ein Messerrakel sein oder eine feststehende (Halb-)Walze.

Gemäß einer bevorzugten Ausführungsform der Erfindung handelt es sich bei den plastifizierten Polymeren um Polymere aus der Gruppe der nicht-thermoplastischen Elastomere, der thermoplastischen Synthesekautschuke, der Polyacrylate, der Polyurethane, der Polyepoxide sowie Mischungen in beliebigen Verhältnissen hieraus.

Weiter vorzugsweise werden die plastifizierten Polymere mit beispielsweise klebrig machenden Harzen, Füllstoffen, Weichmachern, Ölen, Thixotropiermittelnm, pulverförmigen thermischen Vernetzern, Farbstoffen und gegebenenfalls weiteren Zuschlagstoffen abgemischt.

Neben sonstigen Flüssigkeiten wie Ölen oder Weichmachern werden als Flüssigkeit insbesondere thermische Vernetzen und/oder Vernetzungsbeschleuniger sowie Farbstoffdispersionen eingesetzt.

Besonders bevorzugt handelt es sich bei den aus den Planetwalzenextrudern kommenden Mischungen um Selbsthaftklebemassen oder um aushärtbare Strukturklebemassen. Bevorzugt werden nach dem beschriebenen Verfahren Klebebandrollen aus dem *ACX^{plus}*-Sortiment der Firma tesa hergestellt.

Ein weiterer besonders vorteilhaft herzustellender Klebstoff wird ausführlich in der WO 2018/059931 A1 offenbart. Dieser umfasst ein schmelzbares Polybutadien-Polyurethan, gemahlenen Schwefel und jeweils optional zumindest einen Vulkanisationsbeschleuniger, zumindest einen Füllstoff, zumindest ein Epoxidharz, zumindest ein Klebrigmacherharz, zumindest einen Weichmacher sowie weitere Hilfs- und Zusatzstoffe.

Der Klebstoff kann als Klebeband oder Dichtungsband oder als Teil eines Klebe- oder Dichtungsbandes in der Automobilindustrie im Rohbau zur Applikation auf geölten Blechen oder im Lackierprozess zur Applikation auf lackierten Blechen, insbesondere auf KTL-Blechen verwendet werden, aber auch in anderen Bereichen, in denen Prozesstemperaturen zwischen 130 °C und 230 °C zur Verfügung stehen.

Von den optionalen Substanzklassen Vulkanisationsbeschleuniger, Füllstoff, Epoxidharz, Klebrigmacherharz, Bitumen, Weichmacher sowie weitere Hilfs- und Zusatzstoffe kann jeweils nur eine oder jede beliebige Kombination mehrerer Substanzklassen enthalten sein. Ebenso kann innerhalb einer Substanzklasse jeweils eine Verbindung oder eine beliebige Anzahl verschiedener Verbindungen enthalten sein.

Die Erfindung betrifft insbesondere einen thermisch vulkanisierbaren Klebstoff, der bei Raumtemperatur eine feste oder zumindest sehr hochviskose Konsistenz hat und vorzugsweise haftklebrig ist, in einem Temperaturbereich zwischen ungefähr 40 °C und 100 °C als Schmelze in einem Compoundier- und Extrusionsprozess verarbeitet werden kann und thermisch in einem Temperaturbereich zwischen 130 °C und 230 °C vulkanisierbar und somit aushärtbar ist. Die so erzielte Aushärtung beinhaltet eine chemische Vernetzung.

Die mit dem Klebstoff erzielbaren Klebfestigkeiten sollen innerhalb weiter Grenzen beliebig und anforderungsgerecht einstellbar sein. Der Bereich umfasst Zugscherfestigkeiten zwischen größer 0 bis mindestens 30,0 N/mm$^2$. Der Klebstoff soll innerhalb eines Temperaturbereichs von 40 °C bis 100 °C in einem Compoundier- und Extrusionsprozess hergestellt werden können. Das Basiselastomer dieses Klebstoffes muss somit innerhalb dieses letztgenannten Temperaturbereichs als Schmelze vorliegen.

Während der Verarbeitung als Schmelze oder während der nachfolgenden Lagerung bei Temperaturen bis 40 °C darf es nicht zum Anspringen der Vulkanisationsreaktion oder zu einer anderweitigen Vernetzungsreaktion kommen. Im Temperaturbereich von Raumtemperatur (20 °C bis 25 °C, idealerweise 23 °C) bis 30 °C muss der Klebstoff genügend fest beziehungsweise hochviskos sein, so dass er als auf einen Trennliner oder als auf ein Trägermaterial beschichteter Film zu einer Rolle aufgewickelt werden kann, ohne dass er an der Seite herausfließt beziehungsweise durch den Wickeldruck herausgequetscht wird.

Mit thermischer Vulkanisation ist in dieser Schrift ausschließlich die Schwefelvulkanisation gemeint, also die durch Temperaturerhöhung aktivierte und vollzogene Vernetzung ungesättigter Verbindungen mittels Schwefel.

Zur Aktivierung der Schwefelvulkanisation können Vulkanisationsbeschleuniger und Vulkanisationshilfs- und Zusatzstoffe zugesetzt werden. Diese Stoffe bewirken eine Herabsetzung der Aktivierungstemperatur und/oder eine beschleunigte Aushärtung und Vernetzung.

Unter einem schmelzbaren Polybutadien-Polyurethan wird in dieser Schrift ein durch eine Polyadditionsreaktion aus mindestens einem mindestens zweifach hydroxyl-funktionalisierten Polybutadien oder Polybutadien-Derivat und mindestens einem Diisocyanat hergestelltes schmelzbares Reaktionsprodukt verstanden, das bei Raumtemperatur genügend fest und formstabil ist, dass es bei Raumtemperatur auf einem Trennliner oder auf einem Trägermaterial zu einer Rolle aufgewickelt werden kann, ohne dass es an der Seite herausfließt beziehungsweise durch den Wickeldruck herausgequetscht wird. Unter mindestens zweifach hydroxyl-funktionalisierten Polybutadien-Derivaten sind von Polybutadien-Diolen oder -Polyolen abgeleitete Stoffe zu verstehen, die mehrere, jeweils eine Kohlenstoff/ Kohlenstoff-Doppelbindung enthaltende C4-Einheiten besitzen und gleichzeitig noch entweder zusätzliche funktionelle Gruppen wie beispielsweise Epoxidgruppen oder zusätzliche Seitenketten wie beispielsweise Vinyl-Gruppen oder andere zusätzliche Strukturelemente tragen.

Ein schmelzbares Reaktionsprodukt im Sinne dieser Schrift hat eine mit einem Rheometer im Oszillationsversuch bei einer sinusförmig oszillierenden Scherbeanspruchung in einer Platte-Platte-Anordnung, einer Temperatur von 23 °C und einer Oszillationsfrequenz von 10,0 rad/s gemessene komplexe Viskosität von mindestens 3.000 Pa*s, vorzugsweise mindestens 6.000 Pa*s, idealerweise mindestens 10.000 Pa*s. Bei Temperaturen im Bereich zwischen 40 °C und 100 °C und einer Oszillationsfrequenz von 10,0 rad/s verringert sich die komplexe Viskosität bis auf weniger als 1.000 Pa*s, vorzugsweise bis auf weniger als 500 Pa*s, idealerweise bis auf weniger als 200 Pa*s. Die Oszillationsfrequenz entspricht der Winkelfrequenz.

Die komplexe Viskosität $\eta^*$ ist folgendermaßen definiert: $\eta^* = G^* / \omega$
($G^*$ = komplexer Schubmodul, $\omega$ = Winkelfrequenz).

Die weiteren Definitionen lauten:

($G''$ = Viskositätsmodul (Verlustmodul), $G'$ = Elastizitätsmodul (Speichermodul)).
$G'' = \tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor).
$G' = \tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor).
$\omega = 2\pi \cdot f$ (f = Frequenz).

Haftklebrigkeit ist die Eigenschaft eines Stoffes, bereits unter relativ schwachem Andruck eine dauerhafte Verbindung zu einem Haftgrund einzugehen. Stoffe, die diese Eigenschaft besitzen, werden als Haftklebstoffe bezeichnet. Haftklebstoffe sind seit langem bekannt. Häufig können sie nach Gebrauch im Wesentlichen rückstandsfrei vom Haftgrund wieder abgelöst werden. Haftklebstoffe sind in der Regel bei Raumtemperatur permanent eigenklebrig, weisen also eine gewisse Viskosität und Anfassklebrigkeit auf, so dass sie die Oberfläche des jeweiligen Haftgrunds bereits bei geringem Andruck benetzen. Die Fähigkeit eines Haftklebstoffs, auf Werkstoffen zu haften und Kräfte zu übertragen, beruht auf dem Adhäsionsvermögen und der Kohäsion des Haftklebstoffs.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in Form einer planparallelen Schicht in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: $G' = (\tau/\gamma) * \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: $G" = (\tau/\gamma) * \sin(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff und die daraus hergestellte Schicht gelten im Allgemeinen als haftklebrig und werden im Sinne dieser Schrift als haftklebrig definiert, wenn bei Raumtemperatur, hier definitionsgemäß bei 23 °C, im Deformationsfrequenzbereich von $10^0$ bis $10^1$ rad/sec, G' zumindest zum Teil im Bereich von $10^3$ bis $10^7$ Pa liegt und wenn G" ebenfalls zumindest zum Teil in diesem Bereich liegt. Zum Teil heißt, dass zumindest ein Abschnitt der G'-Kurve innerhalb des Fensters liegt, das durch den Deformationsfrequenzbereich von einschließlich $10^0$ bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls innerhalb dieses Fensters liegt.

Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstofffenster nach viskoelastischen Kriterien bezeichnen kann, gibt es wiederum unterschiedliche Sektoren und Quadranten, die die zu erwartenden Haftklebeeigenschaften der jeweils zugehörigen Stoffe näher charakterisieren.

Stoffe mit hohem G" und niedrigem G' innerhalb dieses Fensters zeichnen sich beispielsweise im Allgemeinen durch eine hohe Klebkraft und eine geringe Scherfestigkeit aus, während sich Stoffe mit hohem G" und hohem G' sowohl durch eine hohe Klebkraft als auch durch eine hohe Scherfestigkeit auszeichnen.

Generell sind die Erkenntnisse über die Zusammenhänge zwischen Rheologie und Haftklebrigkeit Stand der Technik und beispielsweise im "Handbook of Pressure Sensitive Adhesive Technology", von Donatas Satas, Third Edition, (1999), Seiten 153 bis 203 beschrieben.

Gemahlener Schwefel ist löslicher oder unlöslicher gemahlener Elementarschwefel. Der Reinheitsgrad sollte mindestens 95 % betragen, besser mindestens 99 %. Der Schwefel sollte so fein gemahlen sein, dass der Siebrückstand bei einer Maschenweite von 100 $\mu$m höchstens 2 % beträgt. Gröbere Sorten funktionieren im Prinzip zwar auch, jedoch kann es dazu führen, dass der Klebstoff dann eine optisch deutlich wahrnehmbare Rauigkeit besitzt und die erzielbaren Klebfestigkeiten etwas geringer sind.

Unter Vulkanisationsbeschleunigern, die in dem Klebstoff optional enthalten sein können, werden in dieser Schrift alle Stoffe verstanden, die die Vulkanisation bekanntermaßen beschleunigen. Diese können auch gleichzeitig Schwefelspender sein. In den Erfindungsgedanken werden auch solche bekannten Schwefelspender einbezogen, die in der Fachliteratur nicht ausdrücklich gleichzeitig auch als Beschleuniger klassifiziert werden.

Die wichtigsten Vulkanisationsbeschleuniger lassen sich in folgende bekannte Substanzklassen einordnen: Mercapto-Beschleuniger, Sulfenamid-Beschleuniger, Sulfenimid-Beschleuniger, Thiuram-Beschleuniger, Dithiocarbamat-Beschleuniger, Dithiocarbamylsulfenamid-Beschleuniger, Xanthogenat-Beschleuniger, Guanidin-Beschleuniger, Amin-Beschleuniger, Thioharnstoff-Beschleuniger, Dithiophosphat-Beschleuniger und Schwefel-Spender.

Beispiele für Mercapto-Beschleuniger sind 2-Mercaptobenzothiazol (MBT), Zink-2-mercaptobenzothiazol (ZMBT) und Dibenzothiazyldisulfid (MBTS). Typische Sulfenamid-Beschleuniger sind N-Cyclohexyl-2-benzothiazolsulfenamid (CBS), N-tert-Butyl-2-benzo-thiazolsulfenamid (TBBS), N-Oxydiethylen-2-benzothiazolsulfenamid (MBS) und N,N'-Dicyclohexyl-2-benzothiazolsulfenamid (DCBS). Ein Beispiel für einen Sulfenimid-Beschleuniger ist N-tert-Butyl-2-benzothiazolsulfenimid. Beispiele für Thiuram-Beschleuniger sind Tetramethylthiurammonosulfid (TMTM), Tetramethylthiuramdisulfid (TMTD), Tetraethylthiuramdisulfid (TETD), Tetrabenzylthiuramdisulfid (TBzTD), Tetraisopropylthiuramdisulfid (TiPTD), Dimethyldiphenylthiuramdisulfid (MPTD) und Dipentamethylenthiuramtetrasulfid (TPTT). Zink-dimethyldithiocarbamat (ZDMC), Zink-diethyldithiocarbamat (ZDEC), Zinkdibutyldithiocarbamat (ZDBC), Zink-pentamethylendithiocarbamat (Z5MC), Zink-ethylphenyldithiocarbamat (ZEPC), Zink-dibenzyldithiocarbamat (ZBEC), Zinkdiisopropyldithiocarbamat (ZDIPC), Piperidin-pentamethylendithiocarbamat (PPC), Tellurdimethyldithiocarbamat (TDMC), Tellur-diethyldithiocarbamat (ZDEC), Bleidimethyldithiocarbamat (PbDMC), Kupfer-dimethyldithiocarbamat (CuDMC), Kupferdibutyldithiocarbamat (CuDBC), Wismuth-dimethyldithiocarbamat (BiDMC) und Natriumdimethyldithiocarbamat (NaDMC) stellen eine Auswahl an bekannten Dithiocarbamat-Beschleunigern dar. Typische Dithiocarbamylsulfenamid-Beschleuniger sind N-Oxydiethylendithiocarbamyl-N'-oxydiethylensulfenamid (OTOS) und N-Oxydiethylendithiocarbamyl-N'-tert-butylsulfenamid (OTTBS). Bekannte Beispiele für Xanthogenat-Beschleuniger sind Zink-isopropylxanthogenat (ZIX), Zink-butylxanthogenat (ZBX), Natrium-isopropylxanthogenat (NaIX) und Polyxanthogenat. Typische Guanidin-Beschleuniger sind Diphenylguanidin (DPG), Di-o-tolylguanidin (DOTG) und o-Tolylbiguanid (OTBG). Amin-Beschleuniger sind zum Beispiel Butyraldehydanilin (BAA), Tricrotonylidentetramin (TCT), Hexamethylentetramin (HEXA), Polyethylenpolyamine (PEP) sowie Cyclohexylethylamin (CEA). N,N'-Ethylenthioharnstoff (ETU), N,N'-Dibutylthioharnstoff (DBTU), N,N'-Diethylthioharnstoff (DETU) und N,N'-Diphenylthioharnstoff (DPTU) sind Beispiele für Thioharnstoff-Beschleuniger. Bekannte Dithiophosphat-Beschleuniger sind Zink-dibutyldithiophosphat (ZBPD), Zink-diisooctyldithiophosphat (ZOPD), Dodecylammonium-diisooctyldithiophosphat (AOPD) und Kupfer-diisopropyldithiophosphat (CuPPD). Als Schwefelspender seien 2-Morpholinodithiobenzothiazol (MBSS), N,N'-Dithiodimorpholin (DTDM) und Caprolactamdisulfid (CLD) genannt.

Generell gehört das Wissen über Vulkanisationsbeschleuniger zum Stand der Technik und ist beispielsweise im "Handbuch der Kautschuk-Technologie (2001)" von Werner Hoffmann und Heinz Gupta dargestellt.

Bevorzugte Substanzklassen sind Mercapto-Beschleuniger, Thiuram-Beschleuniger und Dithiocarbamat-Beschleuniger. Mercapto-Beschleuniger werden als "all-purpose"-Beschleuniger angesehen, die im Temperaturbereich von 160 °C bis 180 °C für eine zügige Vulkanisation sorgen und keinen negativen Einfluss auf die Stabilität des noch nicht vulkanisierten Klebstoffes haben. Die Thiuram-Beschleuniger und Dithiocarbamat-Beschleuniger werden einzeln oder in Kombination, oder auch in Kombination mit den Mercapto-Beschleunigern, als "Ultrabeschleuniger" angesehen, die bereits bei Temperaturen ab 130 °C für eine schnelle Vulkanisation sorgen und dennoch eine ausreichende Stabilität während der Herstellung des Klebstoffes, selbst bei Compoundierungstemperaturen bis ca. 90 °C, und während der späteren Lagerung bei Temperaturen zwischen Raumtemperatur und 30 °C gewährleisten. Ein bevorzugter "all-purpose"-Vulkanisationsbeschleuniger ist MBTS. Bevorzugte "Ultrabeschleuniger" sind TBzTD und ZBEC. Neben technisch-funktionalen Gesichtspunkten spielt bei der Auswahl auch der Sicherheitsaspekt im Hinblick auf die mögliche Freisetzung gefährlicher, carcinoger Spaltprodukte, insbesondere carcinogener N-Nirosamine, eine Rolle. Diesbezüglich gelten MBTS, TBzTD und ZBEC als unkritisch.

Bevorzugte Konzentrationen der Vulkanisationsbeschleuniger in dem thermisch vulkanisierbaren, schmelzbaren, vorzugsweise haftklebrigen Klebstoff betragen zusammen zwischen mindestens 0,1 Gew.-% und maximal 15,0 Gew.-%, bevorzugt zwischen mindestens 0,5 und maximal 12,5 Gew.-% , besonders bevorzugt zwischen mindestens 1,0 und maximal 10,0 Gew.-%.

Hohe Konzentrationen der Vulkanisationsbeschleuniger erniedrigen die Härtungstemperatur, erhöhen aber die Gefahr, dass während der Verarbeitung die Härtung (Vulkanisation) bereits anspringt. Liegt die Härtungstemperatur der Klebemasse unterhalb von 130 °C ist es bevorzugt, für die Compoundierung im Extruder als Compoundierextruder einen Planetwalzenextruder zu verwenden, da hiermit die Compoundiertemperaturen unterhalb von 90 °C, insbesondere bevorzugt unterhalb von 80 °C, gehalten werden können.

Um die Vulkanisation weiter zu beschleunigen, können bei Bedarf auch noch Vulkanisationshilfs- und Zusatzstoffe wie zum Beispiel Metalloxide, insbesondere Zinkoxid, Fettsäuren, wie zum Beispiel Stearinsäure oder deren Salze zugegeben werden. Im Hinblick auf die Stabilität des noch nicht vulkanisierten Klebstoffes und im Hinblick auf die Haftungseigenschaften nach der Vulkanisation, insbesondere auf geölten Blechen, erwies sich die Verwendung von Vulkanisationshilfs- und Zusatzstoffen eher kritisch, so dass bevorzugte Ausführungsformen frei von diesen Stoffen sind.

Als Füllstoffe, die optional ebenfalls enthalten sein können, können sowohl verstärkende, wie zum Beispiel Ruß, als auch nicht verstärkende, wie zum Beispiel Carbonate, insbesondere Kreide oder Sulfate wie zum Bespiel Bariumsulfat, eingesetzt werden. Weitere Beispiele für in Frage kommende Füllstoffe sind Silikate, wie etwa Talkum, Kaolin, calciniertes oder teilcalciniertes Kaolin, Wollastonite oder Glimmer, Hydroxide oder Oxide, wie etwa Quarzmehl, Aluminiumhydroxid, Zinkoxid oder Calciumoxid. Auch Mikrokugeln kommen als Füllstoffe in Frage. Mikrokugeln können Mikrovollglaskugeln, Mikrohohlglaskugeln und/oder Mikrokunststoffkugeln aller Art sein. Die Mikrokunststoffkugeln können vorexpandiert sein oder unexpandiert vorliegen. Die Partikelgröße im expandierten Zuustand liegt meist im Bereich zwischen 20 und 150 μm. Auch Mischungen der genannten Stoffe können eingesetzt werden. Insbesondere haben sich Mischungen aus Calciumcarbonat und Calciumoxid als besonders vorteilhaft im Hinblick auf das Erzielen hoher Klebfestigkeiten und der Minimierung einer gelegentlichen Bläschenbildung während der thermischen Vulkanisation erwiesen. Vorteilhafte Gewichtsanteile von Calciumcarbonat und Calciumoxid an dem thermisch vulkanisierbaren, schmelzbaren, vorzugsweise haftklebrigen Klebstoff betragen zusammen zwischen 10,0 und 70,0 Gew.-%. Auch Talkum hat sich aus den gleichen Gründen als vorteilhaft herausgestellt. Vorteilhafte Gewichtsanteile von Talkum an dem thermisch vulkanisierbaren, schmelzbaren, vorzugsweise haftklebrigen Klebstoff betragen zwischen 10,0 und 50,0 Gew.-%.

Optional kann der thermisch vulkanisierbare, schmelzbare, vorzugsweise haftklebrige Klebstoff Epoxidharze enthalten. Unter einem Epoxidharz werden dabei Kunstharze verstanden, die Epoxidgruppen tragen. Vorteilhaft sind Bisphenol-basierte Epoxidharze, insbesondere Bisphenol A-basierte, aber auch Bisphenol F-basierte. Besonders vorteilhaft ist ein bei Raumtemperatur flüssiges Epoxidharz, insbesondere das Reaktionsprodukt aus Bisphenol-A und Epichlorhydrin mit einem zahlengemittelten, mittleren Molekulargewicht von kleiner oder gleich 700 g/mol (CAS-Nr. 25068-38-6), aber auch entsprechende feste Reaktionsprodukte mit höheren zahlengemittelten, mittleren Molekulargewichten sind optionale Epoxidharze. Andere vorteilhafte Epoxidharze sind Epoxyphenol-Novolak-Harze, Epoxy-dicyclopentadienphenol-Novolak-Harze, Epoxykresol-Novolak-Harze, Glycidylaminbasierte Epoxidharze, insbesondere Triglycidylether von para-Aminophenol, Triglycidylether von meta-Aminophenol, Tetraglycidylether von Methylendianilin, Hydroxylphenyl-basierte Epoxidharze sowie aliphatische Epoxidharze, insbesondere cycloaliphatische. Zu nennen ist hier insbesondere 3,4-Epoxycyclohexylmethyl-3',4'-epoxycyclohexancarboxylat (CAS-Nr. 2386-87-0).

Eine vorteilhafte Konzentration des Epoxidharzes in dem thermisch vulkanisierbaren, schmelzbaren, vorzugsweise haftklebrigen Klebstoff liegt zwischen einschließlich 1,0 Gew.-% und einschließlich 20 Gew.-%. Besonders vorteilhaft ist eine Konzentration zwischen einschließlich 5,0 Gew.-% und einschließlich 15,0 Gew.-%. Der Zusatz von Epoxidharzen hat sich insbesondere im Hinblick auf die Haftungseigenschaften des thermisch vulkanisierbaren, schmelzbaren, vorzugsweise haftklebrigen Klebstoffes auf geölten Blechen nach der thermischen Vulkanisationsreaktion als vorteilhaft herausgestellt. Weiterhin wird die Viskosität des Compounds während der Herstellung des Klebstoffes vorteilhaft herabgesetzt, so dass bei niedrigeren Prozesstemperaturen gearbeitet werden kann.

Vorteilhafterweise erfolgt die chemische Umsetzung zum schmelzbaren Polybutadien-Polyurethan bereits in Gegenwart des optionalen mindestens einen Epoxidharzes. Der Vorteil dieses Verfahrens besteht darin, dass das mindestens eine Epoxidharz energiesparend bei Raumtemperatur eingearbeitet werden kann. Würde dagegen das Polybutadien-Polyurethan erst hergestellt und anschließend das mindestens eine Epoxidharz zugegeben, müsste das Polybutadien-Polyurethan zunächst so hoch erhitzt werden, bis es als Schmelze vorliegt. Dies hätte den Nachteil, dass ein höherer Energieeintrag notwendig wäre. Ein weiterer Vorteil ist, dass die Erweichungsbeziehungsweise Schmelztemperatur des Gemisches aus Prepolymer und Epoxidharz deutlich niedriger als die Erweichungs- beziehungsweise Schmelztemperatur des reinen Prepolymers ist, wobei der Hotmeltcharakter dennoch erhalten bleibt. Eine spätere Compoundierung mit Schwefel und weiteren Stoffen, wie zum Beispiel Vulkanisationsbeschleunigern kann somit energiesparend und schonend bei niedrigeren Temperaturen erfolgen als ohne das bereits während der Polybutadien-Polyurethan-Herstellung eingearbeitete Epoxidharz. Auf diese Weise ist auch eine Compoundierung mit sogenannten Ultrabeschleunigern, die mitunter bereits bei ungefähr 120°C innerhalb von wenigen Minuten die Vulkanisation anspringen lassen, möglich, ohne dass es zu unerwünschten Aushärtungen oder Vergelungen während des Compoundierprozesses kommt. Erfolgt die spätere Compoundierung des Polybutadien-Polyurethans mit Schwefel, Vulkanisationsbeschleunigern und Vulkanisationshilfs- und Zusatzstoffen in einem kontinuierlich arbeitendem Mischaggregat, insbesondere einem Compoundierextruder, ist ein weiterer Vorteil dadurch gegeben, dass keine der in der Regel begrenzt verfügbaren Dosierstellen am Compoundierextruder durch das mindestens eine Epoxidharz blockiert wäre.

Die Tatsache, dass es technisch möglich ist, die isocyanat-basierte chemische Umsetzung zum Polybutadien-Polyurethan in Gegenwart eines oder mehrerer Epoxidharze erfolgen zu lassen, ist für den Fachmann überraschend, denn Isocyanate sind in der Fachliteratur als reaktiv gegenüber Epoxiden beschrieben, so beispielsweise in Ullmann's Encyclopedia of Industrial Chemistry, 6th Edition, Vol. 12, Seite 271 (Tabelle) und in Encyclopedia of Polymer Science and Engineering, Vol. 6, S. 345.

Überraschend wurde zudem gefunden, dass Mischungen aus Epoxidharz und dem Polybutadien-Polyurethan-Hotmelt zur Phasenseparierung neigen, wenn das mindestens eine Epoxidharz erst nach der Herstellung des Polybutadien-Polyurethans zugemischt wird. Erfolgt dagegen die chemische Umsetzung zum Polybutadien-Polyurethan in Gegenwart des Epoxidharzes/ der Epoxidharze, werden zwar in der Regel je nach Mischungsverhältnis trübe, aber nicht separierende Mischungen erhalten, die den Vorteil haben, homogen zu vulkanisieren (auszuhärten), wodurch eine höhere Festigkeit und eine verbesserte Haftung erzielt werden kann als bei Verwendung einer inhomogenen Mischung aus Polybutadien-Polyurethan und Epoxidharz. In analoger Weise können auch andere Stoffe, wie zum Beispiel Weichmacher, Klebrigmacherharze, Bitumen oder auch Füllstoffe oder rheologische Additive bereits vor oder während der chemischen Umsetzung zum Polybutadien-Polyurethan zugegeben werden.

Optional kann der thermisch vulkanisierbare, schmelzbare, vorzugsweise haftklebrige Klebstoff auch Klebrigmacherharze enthalten. Unter der Bezeichnung "Klebrigmacherharz", englisch "Tackifier Resins", versteht der Fachmann einen Stoff auf Harzbasis, der die Klebrigkeit erhöht. Klebrigmacherharze lassen sich einteilen in Naturharze und synthetische Harze.

Typische Naturharze sind auf Kolophonium basierende Harze und ihre Derivate. Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Typische synthetische Harze sind Polyterpenharze, wobei die Rohstoffe hier allerdings natürlichen Quellen entstammen, Kohlenwasserstoffharze und Terpenphenolharze. Es handelt sich dabei um Polymere mit niedrigem Molekulargewicht. Das gewichtsgemittelte, mittlere Molekulargewicht beträgt in der Regel kleiner 25.000 g/mol.

Polyterpenharze basieren auf α-Pinen und/oder β-Pinen und/oder δ-Limonen. Diese können hydriert, nicht hydriert oder teilhydriert sein.

Rohstoffe für die meisten Kohlenwasserstoffharze sind Nebenprodukte, die bei der Crackung von Naphtha oder Gasöl anfallen. Kohlenwasserstoffharze können danach klassifiziert werden, ob sie auf in erster Linie aromatischen, aliphatischen oder Dien-Monomeren basieren. Aromatische werden oft als C-9-Harze, aliphatische als C-5-Harze und Dien-Harze als (C-5)$_2$-Harze bezeichnet. Gemischte aromatisch-aliphatische Kohlenwasserstoffharze ((C-5/C-9)-Harze) sind ebenfalls vom Erfindungsgedanken eingeschlossen. Auch Kohlenwasserstoffharze können hydriert, nicht hydriert oder teilhydriert sein.

Vom Erfindungsgedanken eingeschlossen sind weiterhin Monomerharze vom Typ Styrol / α-Methylstyrol (CAS-Nr.: 9011-11-4). Terpenphenolharze sind nach DIN 16916-1 1981-06 und ISO/TR 8244:1988 Harze, die durch Säure-katalysierte Addition von Phenolen an Terpene oder Kolophonium hergestellt werden.

Erfindungsgemäß bevorzugte Klebrigmacherharze sind Polyterpenharze auf Basis von α-Pinen und/oder β-Pinen und/oder δ-Limonen. Ganz besonders bevorzugt sind β-Pinen-Harze (CAS-Nr.: 25719-60-2), beispielsweise das Harz Dercolyte S-115 von der Firma DRT.

Vorteilhafte Konzentrationen der Klebrigmacherharze in dem thermisch vulkanisierbaren, schmelzbaren, vorzugsweise haftklebrigen Klebstoff liegen zwischen einschließlich 1,0 Gew.-% und einschließlich 30,0 Gew.-%. Besonders vorteilhaft sind Konzentrationen zwischen einschließlich 5,0 Gew.-% und einschließlich 20,0 Gew.-%. Der Zusatz von Klebrigmacherharzen hat sich insbesondere im Hinblick auf die Haftungseigenschaften des thermisch vulkanisierbaren, schmelzbaren, vorzugsweise haftklebrigen Klebstoffes auf geölten Blechen vor der thermischen Vulkanisationsreaktion als vorteilhaft herausgestellt. Die Klebkraft des noch nicht vulkanisierten Klebstoffes auf geölten Blechen kann so signifikant erhöht werden.

Optional kann der thermisch vulkanisierbare, schmelzbare, vorzugsweise haftklebrige Klebstoff weiterhin Bitumen enthalten. Bitumen ist ein dunkelfarbiges, halbfestes bis springhartes, hochmolekulares Kohlenwasserstoffgemisch, das bei der Destillation geeigneten Erdöls als Rückstand anfällt und noch chemisch gebundenen Schwefel, Sauerstoff, Stickstoff und einige Spuren von Metallen enthält. Physikalisch gesehen gehört Bitumen zu den thermoplastischen Stoffen, das heißt seine Eigenschaften sind temperaturabhängig. Bei Abkühlung wird es spröde, bei Erwärmung durchläuft es stufenlos alle Zustände von fest über zähflüssig bis dünnflüssig. Man unterscheidet unter anderem folgende Bitumenarten und abgeleitete Produkte: Straßenbaubitumen, insbesondere Weichbitumen, modifiziertes Bitumen, insbesondere polymermodifiziertes Bitumen, Industrie-Bitumen, insbesondere Oxidationsbitumen beziehungsweise Hartbitumen, Flux-Bitumen und Bitumenemulsion.

Erfindungsgemäß bevorzugt ist Straßenbaubitumen. Besonders bevorzugt ist die Sorte 50/70, wobei die Zahlen die minimale und maximale Penetration bei 25 °C in der Einheit mm/10 nach DIN EN 1426 angeben. Vorteilhafte Bitumen-Konzentrationen in dem thermisch vulkanisierbaren, schmelzbaren, vorzugsweise haftklebrigen Klebstoff liegen zwischen einschließlich 1,0 Gew.-% und einschließlich 30,0 Gew.-%. Besonders vorteilhaft sind Konzentrationen zwischen einschließlich 5,0 Gew.-% und einschließlich 20,0 Gew.-%. Durch den Zusatz von Bitumen kann die Ölaufnahme verbessert werden, wenn auf geölten Blechen geklebt wird.

Optional kann der thermisch vulkanisierbare, schmelzbare, vorzugsweise haftklebrige Klebstoff außerdem Weichmacher enthalten. Weichmacher sind flüssige oder feste, indifferente organische Substanzen mit geringem Dampfdruck, überwiegend solche esterartiger Natur, welche ohne chemische Reaktion, vorzugsweise durch ihr Löse- und Quellvermögen, unter Umständen aber auch ohne ein solches, mit hochpolymeren Stoffen in physikalische Wechselwirkung treten und ein homogenes System mit diesen bilden können. Die Kurzbezeichnungen von Weichmachern sind in der DIN EN ISO 1043-3: 2000-01 geregelt. Die wichtigsten Weichmacher lassen sich in größere Gruppen einteilen, die im Folgenden aufgeführt sind, wobei in Klammern die Kurzzeichen nach DIN EN ISO 1043-3: 2000-01 stehen.

Phthalsäureester, auch kurz Phthalate genannt, umfassen unter anderem Dioctylphthalat (DOP; Di(2-ethylhexyl)phthalat), Diisononylphthalat (DINP), Diisodecylphthalat (DIDP) Phthalsäureester mit überwiegend linearen C$_6$- bis C$_{11}$-Alkoholen, Dibutylphthalat (DBP), Diisobutylphthalat (DIBP), Dicyclohexylphthalat (DCHP), Dimethylphthalat (DMP) und Diethylphthalat (DEP) sowie Mischester aus Benzyl(butyl)- (BBP), Butyl(octyl)-, Butyl(decyl)- und Dipentylphthalat, Bis(2-methoxyethyl)phthalat und Dicaprylphthalat (DCP).

Ein Beispiel für Trimellit(h)säureester mit (überwiegend) linearen C$_6$- bis C$_{11}$-Alkoholen ist Tris(2-ethylhexyl)trimellitat (TOTM).

Acyclische aliphatische Dicarbonsäureester sind zum Beispiel Ester der Adipinsäure wie Bis(2-ethylhexyl)adipat (Dioctyladipat, DOA), Bis(8-methylnonyl)adipat (Diisodecyladipat, DIDA), Dibutyldecandioat (Dibutylsebacat, DBS), Bis(2-ethylhexyl)decandioat (Dioctylsebacat, DOS); Ein Beispiel für einen cyclischen aliphatischen Dicarbonsäureester ist 1,2-Cyclohexandicarbonsäurediisononylester (DINCH).

Beispiele für Polymerweichmacher sind Polyester aus Adipin-, Decandi-, Nonandi- und Phthalsäure mit Diolen wie Butan-1,3-diol, Propan-1,2-diol, Butan-1,4-diol, Hexan-1,6-diol und anderen ($M_r$ ca. 1800 bis 13000 g/mol).

Phosphorsäureester, kurz Phosphate genannt, sind eine weitere Gruppe. Beispielhaft zu nennen wären hier Trikresylphosphat (TCF), Triphenylphosphat (TPP), Diphenylkresylphosphat (DPCF), (2-Ethylhexyl)diphenylphosphat (Diphenyloctylphosphat, DPOF), Tris(2-ethylhexyl)phosphat (TOF) und Tris(2-butoxyethyl)phosphat.

Butyloleat oder Butylstearat sind Beispiele für Fettsäureester, die eine weitere Gruppe darstellen. Weitere Beispiele für diese Gruppe sind Methyl- und Butylester der acetylierten Ricinolfettsäure und Fettsäureglycolester sowie Triethylenglycol-bis(2-ethylbutyrat).

Citronensäureester sind Beispiele für die Gruppe der Hydroxycarbonsäureester. Weitere Beispiele sind Weinsäureester und Milchsäureester.

Eine weitere Gruppe von Weichmachern sind Epoxyweichmacher, zum Beispiel epoxidierte Fettsäure-Derivate, insbesondere Triacylglycerole und Monoester. Auch einige der zuvor genannten Epoxidharze lassen sich in die Gruppe der Weichmacher einordnen. Weiterhin zu nennen wären noch Polyamidweichmacher, zum Beispiel Benzolsulfonamide oder Methylbenzolsulfonamide. Eine weitere Gruppe von Weichmachern sind Alkylsulfonsäureester des Phenols (ASE). Auch Mineralöle sind im Sinne dieser Schrift als Weichmacher zu betrachten. Bevorzugt sind naphthenische Mineralöle. Auch das bereits separat aufgeführte Bitumen ließe sich in die Rubrik der Weichmacher einordnen.

In einer optionalen Ausführungsform enthält der thermisch vulkanisierbare, schmelzbare, vorzugsweise haftklebrige Klebstoff weitere Hilfs- und Zusatzstoffe wie zum Beispiel rheologische Additive, Alterungsschutzmittel (Antioxidantien), Lichtschutzmittel oder UV-Absorber. Beispiele für rheologische Additive sind pyrogene, hydrophobierte oder nicht hydrophobierte Kieselsäuren, Schichtsilikate (Bentonite), hochmolekulare Polyamidpulver oder Rizinusölderivat-Pulver. Die genannten rheologischen Additive können auch in die Rubrik der Füllstoffe eingeordnet werden. Zu den geeigneten Antioxidantien zählen zum Beispiel sterisch gehinderte Phenole, Hydrochinon-Derivate, Amine, organische Schwefelverbindungen oder organische Phosphorverbindungen.

Als Lichtschutzmittel finden zum Beispiel die bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbarten Verbindungen Verwendung.

In einer vorteilhaften Ausführungsform ist das schmelzbare Polybutadien-Polyurethan ein durch eine Polyadditionsreaktion aus mindestens einem Polybutadien-Diol, zumindest einem Kettenverlängerer mit einer Hydroxyl-Funktionalität von zwei und einer Molmasse von kleiner oder gleich 300 g/mol und optional zumindest einem Polybutadien-Polyol mit einer zahlengemittelten, mittleren Funktionalität zwischen größer 2,0 und kleiner oder gleich 3,0 mit zumindest einem aliphatischen oder alicyclischen Diisocyanat hergestelltes Reaktionsprodukt.

Kettenverlängerer im Sinne dieser Schrift sind alle Hydroxylgruppen tragenden Verbindungen mit einer Hydroxyl-Funktionalität von zwei und einer Molmasse von kleiner oder gleich 300 g/mol. Sie tragen keine weiteren isocyanatreaktiven Gruppen. Es sind somit Diole mit einer Molmasse von kleiner oder gleich 300 g/mol. Bekanntlich sind viele Kettenverlängerer, die zur Herstellung von Polyurethanen auf Basis von Polyester- oder PolyetherPolyolen Verwendung finden, nicht mit Polybutadien-Diolen und -Polyolen verträglich. Es kommt zu Entmischungen. Erfindungsgemäß bevorzugt sind die mit Polybutadien-Diolen und -Polyolen verträglichen Kettenverlängerer. Dies sind beispielsweise N,N-Diisopropanolanilin (CAS-Nr. 003077-13-2), 2,2,4-Trimethyl-1,3-pentandiol (CAS-Nr. 144-19-4 ) und 2-Butyl-2-Ethyl-1,3-propandiol (CAS-Nr. 115-84-4). Besonders bevorzugt ist 2-Ethyl-1,3-hexandiol (CAS-Nr. 94-96-2). Die Erkenntnisse über die mit Polybutadien-Diolen und -Polyolen verträglichen Kettenverlängerer gehören zum Stand der Technik. Sie sind beispielsweise publiziert in Herbert Chao, Nan Tian, Cray Valley, USA, LLC, Exton, PA, PCI, April 2010.

Zur Erzielung einer hohen Haftklebrigkeit (eines hohen Tacks) unter gleichzeitiger Vermeidung einer zu großen Weichheit des Polybutadien-Polyurethans, die zu einer verminderten Scherfestigkeit führen würde, ist es vorteilhaft, wenn der anzahlmäßige Anteil der zur Bildung des Polybutadien-Polyurethans eingebrachten Hydroxylgruppen, die von dem zumindest einen Kettenverlängerer stammen, zwischen größer oder gleich 20,0 % und kleiner oder gleich 80,0 %, bevorzugt zwischen größer oder gleich 30,0 % und kleiner oder gleich 70,0 % beträgt. Der anzahlmäßige Anteil entspricht stets dem Stoffmengenanteil.

Unter einem Polybutadien-Diol werden in dieser Schrift alle hydroxyl-funktionalisierten Polybutadiene oder deren Derivate verstanden, deren zahlengemittelte, mittlere Hydroxyl-Funktionalität zwei oder etwas weniger als zwei, mindestens aber 1,5, vorzugsweise mindestens 1,8 beträgt. Keinesfalls ist die zahlengemittelte, mittlere Hydroxyl-Funktionalität eines Polybutadien-Diols größer als zwei.

Unter einem Polybutadien-Polyol werden in dieser Schrift alle hydroxyl-funktionalisierten Polybutadiene oder deren Derivate mit einer zahlengemittelten, mittleren Funktionalität zwischen größer 2,0 und kleiner oder gleich 3,0 verstanden.

Unter der zahlengemittelten, mittleren Hydroxyl-Funktionalität wird die mittlere Zahl der Hydroxylgruppen pro Molekül eines Polyols verstanden. Sie wird in dieser Schrift auf das zahlengemittelte, mittlere Molekulargewicht des jeweiligen Polyols bezogen und nach der folgenden Formel berechnet:

$$f = M_n[g/mol] \times OHZ\ [mmol\ OH/kg]/10^6$$

f ist die zahlengemittelte, mittlere Hydroxyl-Funktionalität. $M_n$ ist das zahlengemittelte mittlere Molekulargewicht des jeweiligen Polyols in der Einheit [g/mol] und OHZ ist die Hydroxylzahl des Polyols in der Einheit [mmol OH / kg].

Die Hydroxylzahl ist ein Maß für den Gehalt an Hydroxylgruppen in einem Polyol.

Die Bestimmung der Hydroxylzahl erfolgt dabei nach DIN 53240. Nach dieser Methode wird die Hydroxylzahl (OHZ) in der Einheit [mg KOH/g] angegeben. Sie entspricht der Menge KOH in [mg], welche der bei der Acetylierung von 1 g Polyol gebundenen Menge Essigsäure gleichwertig ist. Zum Zwecke der Vereinfachung der Rezepturberechnungen wird die Hydroxylzahl in dieser Schrift in die Einheit [mmol OH/kg] umgerechnet.

Dies erfolgt nach folgender Formel:

$$OHZ\ [mmol\ OH/kg] = OHZ[mg\ KOH/g] \times 1000/56,1.$$

56,1 ist dabei die Molmasse von KOH.

Die Hydroxylgruppen der Polybutadien-Diole und -Polyole können primär oder sekundär an die Polybutadien-Kette gebunden sein. Die Butadien-Einheiten der Polybutadien-Kette können in einer 1,4-cis oder -trans-Form oder in einer 1,2-Form mit Vinyl-Gruppen in der Seitenkette oder in einer gemischten Weise miteinander verknüpft sein. Polybutadien-Diole werden durch anionische Polymerisation hergestellt während Polybutadien-Polyole mit einer zahlengemittelten, mittleren Funktionalität zwischen größer 2,0 und kleiner oder gleich 3,0 durch radikalische Polymerisation hergestellt werden. Polybutadien-Diole sind unter dem Handelsnamen Krasol ® kommerziell verfügbar, Polybutadien-Polyole mit einer zahlengemittelten, mittleren Funktionalität zwischen größer 2,0 und kleiner oder gleich 3,0 unter dem Handelsnamen Poly bd ®, beide Sorten von der Firma Cray Valley.

Zur Erzielung einer hohen Haftklebrigkeit (eines hohen Tacks) ist es vorteilhaft, Polybutadien-Diole mit einer zahlengemittelten mittleren Molmasse zwischen größer 1000 g/mol und kleiner 5000 g/mol, bevorzugt zwischen größer oder gleich 2000 g/mol und kleiner oder gleich 3000 g/mol zu verwenden.

Auch die optionalen Polybutadien-Polyole mit einer zahlengemittelten, mittleren Funktionalität zwischen größer 2,0 und kleiner oder gleich 3,0 sollten aus dem gleichen Grund vorteilhafterweise eine zahlengemittelte mittleren Molmasse zwischen größer 1000 g/mol und kleiner 5000 g/mol, bevorzugt zwischen größer oder gleich 2000 g/mol und kleiner oder gleich 3000 g/mol haben.

Die Polybutadien-Polyole mit einer zahlengemittelten, mittleren Funktionalität zwischen größer 2,0 und kleiner oder gleich 3,0 können optional zur Herstellung des Polybutadien-Polyurethans mitverwendet werden, um Verzweigungsstellen in das Polyurethan einzubauen. Ein gewisser Verzweigungsgrad hätte den Vorteil, dass das beschichtete Polyurethan während der thermischen Vulkanisation im Verlauf der Temperaturzuführung, aber vor dem Anspringen der Vulkanisationsreaktion weniger stark erweichen würde und somit in dieser Phase unmittelbar vor der durch die Vulkanisation hervorgerufenen Aushärtung eine höhere Scherfestigkeit besitzen würde.

Bei Mitverwendung der optionalen Polybutadien-Polyole mit einer zahlengemittelten, mittleren Funktionalität zwischen größer 2,0 und kleiner oder gleich 3,0 zur Herstellung des Polybutadien-Polyurethans muss darauf geachtet werden, dass keine Gelierung eintritt, dass also der Verzweigungsgrad im Verhältnis zur Länge der erzeugten Prepolymerketten nicht so hoch ist, dass es zu einer Vernetzung während der Polyadditionsreaktion kommt. Der Grad der Verzweigung wird so eingestellt, dass die Schmelzbarkeit des Polybutadien-Polyurethans gewährleistet ist, dass sich also keine vernetzten Strukturen ausbilden. Um vernetzte Strukturen auszuschließen, darf der sogenannte Gelpunkt nicht überschritten werden. Der theoretische Gelpunkt lässt sich mit der Gelpunktsgleichung von P.J.Flory berechnen. Eine aus der Flory-Gleichung abgeleitete Formel zur Abschätzung des Gelierungs- NCO/OH-Verhältnisses in Polyurethan-Bildungsreaktionen aus Diolen und Triolen mit Diisocyanaten im Unterschuss, lautet:

$$\left[\frac{NCO}{OH}\right]_{Gelierung} = \cfrac{1}{1 + \cfrac{1}{\cfrac{(Diol\text{-}OH)}{(Triol\text{-}OH)} + 1}}$$

Mit Diol-OH ist in dieser Formel die Gesamtanzahl der an der Polyurethan-Bildungsreaktion beteiligten Hydroxylgruppen gemeint, die von Polyolen herrühren, deren Hydroxyl-Funktionalität kleiner oder gleich zwei ist. Darin eingeschlossen sind auch die Kettenverlängerer. Mit Triol-OH ist die Gesamtanzahl der an der Polyurethan-Bildungsreaktion beteiligten Hydroxylgruppen gemeint, die an Polyole gebunden sind, deren Funktionalität größer zwei und kleiner oder gleich drei ist.

Wird das Gelierungs-NCO/OH-Verhältnis erreicht oder überschritten, muss mit der Ausbildung vernetzter Strukturen, also mit dem Einsetzen einer Gelierung, gerechnet werden. Die Formel liefert nur einen ungefähren, aber für die Praxis in der Regel ausreichenden Anhaltspunkt, ab welchem NCO/OH-Verhältnis die tatsächliche Gelierung eintritt.

Wird mit Diisocyanaten im Überschuss gearbeitet, ist also das NCO/OH-Verhältnis größer 1,0, ist obige Formel reziprok anzuwenden.

Der anzahlmäßige Anteil der zur Bildung des Polybutadien-Polyurethans eingebrachten Hydroxylgruppen, die von dem optionalen mindestens einen Polybutadien-Polyol mit einer zahlengemittelten, mittleren Funktionalität zwischen größer 2,0 und kleiner oder gleich 3,0 stammen, beträgt vorteilhafterweise maximal 50,0 %, bevorzugt maximal 30,0 %, besonders bevorzugt maximal 10%. Höhere Anteile erfordern ein unvorteilhaft geringes NCO/OH-Verhältnis bei NCO-Unterschuss beziehungsweise ein unvorteilhaft hohes NCO/OH-Verhältnis bei NCO-Überschuss, das eine unvorteilhaft niedrige Erweichungstemperatur des hydroxyl-funktionalisierten Polybutadien-Polyurethan-Hotmelt-Prepolymers zur Folge hätte.

Im Hinblick auf die Prozesssicherheit beträgt der Anteil ganz besonders vorteilhaft 0,0%. Bei einem Anteil von 0,0% ist das Risiko der vorzeitigen Ausbildung vernetzter Strukturen, also das Einsetzen einer Gelierung während der Polyurethan-Herstellung, am geringsten.

Das Polybutadien-Polyurethan wird durch Umsetzung der genannten Diole/ Polyole mit zumindest einem aliphatischen oder alicyclischen Diisocyanat erhalten.

Unter aliphatischen oder alicyclischen Diisocyanaten werden in dieser Schrift alle organischen Polyisocyanate mit einer Isocyanat-Funktionalität von zwei verstanden, in denen die Isocyanat-Gruppen nicht direkt an ein nach der Hückel-Regel aromatisches Ringsystem gebunden sind. Beispiele für aliphatische oder alicyclische Diisocyanate sind Butan-1,4-diisocyanat, Tetramethoxybutan-1,4-diisocyanat, Hexan-1,6-diisocyanat, Ethylendiisocyanat, 2,2,4-Trimethyl-hexamethylendiisocyanat, Ethylethylendiisocyanat, Dicyclohexylmethan-4,4'-diisocyanat (H12MDI), 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanatocyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl sowie m-Tetramethyl-xylen-diisocyanat (TMXDI). Besonders bevorzugt sind Isophorondiisocyanat (CAS-Nr. 4098-71-9) und Dicyclohexylmethan-4,4'-diisocyanat (CAS-Nr. 5124-30-1).

Das Verhältnis der Gesamtanzahl der Isocyanat-Gruppen zur Gesamtanzahl der Hydroxylgruppen der an der chemischen Umsetzung zum Polybutadien-Polyurethan beteiligten Stoffe liegt in einer vorteilhaften Ausführungsform zwischen größer oder gleich 0,3 und kleiner oder gleich 1,3, bevorzugt zwischen größer oder gleich 0,4 und kleiner oder gleich 1,2, besonders bevorzugt zwischen größer oder gleich 0,5 und kleiner oder gleich 1,1, ganz besonders bevorzugt zwischen größer oder gleich 0,6 und kleiner oder gleich 1,0. Die bevorzugten Verhältnisse führen zu Hotmelt-Polyurethanen mit einer bei Raumtemperatur besonders festen Konsistenz und einer gleichzeitig hohen Haftklebrigkeit (eines hohen Tacks).

Bevorzugt umfasst das erfindungsgemäße Polybutadien-Polyurethan das chemische Umsetzungsprodukt aus ausschließlich einem oder mehreren Polybutadien-Diolen, optional einem oder mehreren Polybutadien-Polyolen mit einer zahlengemittelten, mittleren Funktionalität zwischen größer 2,0 und kleiner oder gleich 3,0 und einem oder mehreren Kettenverlängerers mit einer Hydroxyl-Funktionalität von zwei und einer Molmasse von kleiner oder gleich 300 g/mol mit einem oder mehreren aliphatischen oder alicyclischen Diisocyanaten. An der chemischen Umsetzung zum Polybutadien-Polyurethan sind also bevorzugt keine zusätzlichen, anderen Polyole oder Isocyanate beteiligt, insbesondere keine PolyetherPolyole, keine Polyester-Polyole und keine aromatischen Diisocyanate. Es wird angenommen, dass sich bei Verwendung des erfindungsgemäßen Polybutadien-Polyurethans als Basiselastomer zur Herstellung eines thermisch vulkanisierbaren, schmelzbaren, vorzugsweise haftklebrigen Klebstoffes Polyether- und Polyester-Polyole unvorteilhaft auf die Haftungseigenschaften nach der Vulkanisationsreaktion auswirken, insbesondere auf die Haftungseigenschaften auf geölten Blechen. Weiterhin wird angenommen, dass sich aromatische Diisocyanate unvorteilhaft auf die Haftklebrigkeit (den Tack) auswirken.

Zur Beschleunigung der Reaktion erfolgt die chemische Umsetzung zum Polybutadien-Polyurethan bevorzugt unter Zusatz eines Katalysators. Es können ein oder mehrere dem Fachmann bekannte Katalysatoren wie zum Beispiel tertiäre Amine, bismut- oder zinnorganische Verbindungen eingesetzt werden, um nur einige zu nennen. Sehr vorteilhaft können Bismut und Kohlenstoff enthaltende Katalysatoren eingesetzt werden, bevorzugt ein Bismutcarboxylat oder ein Bismutcarboxylat-Derivat. Besonders vorteilhaft ist Bismuttrisneodecanoat (CAS-Nr. 34364-26-6).

Die Konzentration der Katalysatoren wird auf die gewünschte Reaktionsgeschwindigkeit abgestimmt und liegt typischerweise zwischen 0,01 Gew.-% und 0,5 Gew.-% des herzustellenden Polybutadien-Polyurethans.

Das Polybutadien-Polyurethan wird bevorzugt ohne die Verwendung von Lösemitteln hergestellt. Die Einbeziehung von Lösemitteln in den Herstellprozess ist zwar technisch leicht möglich, bringt aber normalerweise keine Vorteile.

Die vorliegende Erfindung betrifft darüber hinaus ein Klebeband, das auf einer Seite oder auf beiden Seiten zumindest teilweise mit dem Haftklebstoff beschichtet ist. Dabei kann es sich bei dem Klebeband auch um ein Transferklebeband handeln. Ein Klebeband ermöglicht eine besonders einfache und präzise Verklebung und ist daher besonders geeignet.

Der allgemeine Ausdruck "Klebeband" umfasst ein Trägermaterial, welches ein- oder beidseitig jeweils zumindest teilweise mit einem (Haft)klebstoff versehen ist. Das Trägermaterial umfasst alle flächigen Gebilde, beispielsweise in zwei Dimensionen ausgedehnte Folien oder Folienabschnitte, Bänder mit ausgedehnter Länge und begrenzter Breite, Bandabschnitte, Stanzlinge (beispielsweise in Form von Umrandungen oder Begrenzungen einer zu klebenden Anordnung), andere Formkörper, Mehrschichtanordnungen und dergleichen. Dabei sind für verschiedene Anwendungen unterschiedlichste Träger wie zum Beispiel Folien, Gewebe, Vliese und Papiere mit den Klebstoffen kombinierbar. Des Weiteren umfasst der Ausdruck "Klebeband" auch so genannte "Transferklebebänder", das heißt ein Klebeband ohne Träger. Bei einem Transferklebeband ist der Klebstoff vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, der Klebstoff appliziert und dann der zweite Liner entfernt. Der Klebstoff kann so direkt zur Verbindung zweier Oberflächen verwendet werden.

Es sind aber auch Klebebänder möglich, bei denen nicht mit zwei Linern sondern mit einem einzigen doppelseitig trennend ausgerüstet Liner gearbeitet wird. Die Klebebandbahn ist dann an ihrer Oberseite mit der einen Seite eines doppelseitig trennend ausgerüsteten Liners abgedeckt, ihre Unterseite mit der Rückseite des doppelseitig trennend ausgerüsteten Liners, insbesondere einer benachbarten Windung auf einem Ballen oder einer Rolle.

Als Trägermaterial eines Klebebandes werden vorliegend bevorzugt Polymerfolien, Folienverbunde oder mit organischen und/oder anorganischen Schichten versehene Folien oder Folienverbunde eingesetzt, wobei Folien, insbesondere dimensionsstabile Kunststoff- oder Metallfolien, bevorzugt werden. Derartige Folien/Folienverbunde können aus allen gängigen zur Folienherstellung verwendeten Kunststoffen bestehen, beispielhaft aber nicht einschränkend erwähnt seien:

Polyethylen, Polypropylen - insbesondere das durch mono- oder biaxiale Streckung erzeugte orientierte Polypropylen (OPP), Cyclische Olefin Copolymere (COC), Polyvinylchlorid (PVC), Polyester - insbesondere Polyethylenterephthalat (PET) und Poylethylennaphtalat (PEN), Ethylenvinylalkohol (EVOH), Polyvinylidenchlorid (PVDC), Polyvinylidenfluorid (PVDF), Polyacrylnitril (PAN), Polycarbonat (PC), Polyamid (PA), Polyethersulfon (PES) oder Polyimid (PI).

Polyesterfolien weisen den Vorteil auf, dass sie für Temperaturstabilität sorgen und eine erhöhte mechanische Stabilität einbringen. Ganz besonders bevorzugt besteht daher eine Trägerschicht in einem erfindungsgemäßen Liner aus einer Polyesterfolie, beispielsweise aus biaxial verstrecktem Polyethylenterephthalat.

Bei doppelseitig (selbst)klebenden Klebebändern können als obere und untere Schicht Klebstoffe gleicher oder verschiedener Art und/oder gleicher oder verschiedener Schichtdicke zur Anwendung kommen. Der Träger kann dabei auf einer oder beiden Seiten dem Stand der Technik entsprechend vorbehandelt sein, so dass beispielsweise eine Verbesserung der Klebstoffverankerung erzielt wird. Die Haftklebstoffschichten können optional mit Trennpapieren oder Trennfolien eingedeckt werden. Alternativ kann auch nur eine Klebstoffschicht mit einem doppelseitig trennenden Liner eingedeckt sein.

In einer Variante ist in dem doppelseitig (selbst)klebenden Klebeband ein Klebstoff vorgesehen sowie ein beliebiger weiterer, zum Beispiel ein solcher, der besonders gut auf einem Abdecksubstrat haftet oder eine besonders gute Repositionierbarkeit zeigt.

Die Dicke der Haftklebstoffschicht, die entweder als Transferklebeband oder auf einem flächigen Gebilde beschichtet vorliegt, beträgt bevorzugt zwischen 10 $\mu$m und 5000 $\mu$m, weiter bevorzugt zwischen 100 $\mu$m und 4000 $\mu$m und besonders bevorzugt zwischen etwa 200 $\mu$m und 3000 $\mu$m.

Für doppelseitige Klebebänder gilt für die Klebstoffe ebenfalls, dass die Dicke der einzelnen Haftklebstoffschicht(en) bevorzugt zwischen 10 $\mu$m und 5000 $\mu$m, weiter bevorzugt zwischen 100 $\mu$m und 4000 $\mu$m und besonders bevorzugt zwischen etwa 200 $\mu$m und 3000 $\mu$m liegt.

Klebebänder, die ein- oder beidseitig mit Klebstoffen beschichtet sind, werden am Ende des Herstellungsprozesses zumeist zu einer Rolle in Form einer archimedischen Spirale oder kreuzgespult aufgewickelt. Um bei doppelseitig klebenden Klebebändern zu verhindern, dass die Klebstoffe miteinander in Kontakt kommen, oder um bei einseitig klebenden Klebebändern eine Verklebung der Klebstoffe auf dem Träger zu verhindern, werden die Klebebänder vor dem Wickeln mit einem Abdeckmaterial (auch als Trennmaterial bezeichnet) eingedeckt, das zusammen mit dem Klebeband aufgewickelt wird. Dem Fachmann sind derartige Abdeckmaterialien unter den Namen Liner oder Releaseliner bekannt. Neben der Abdeckung von ein- oder doppelseitig klebenden Klebebändern werden Liner auch zur Eindeckung von reinen Klebstoffen (Transferklebeband) und Klebebandabschnitten (zum Beispiel Etiketten) eingesetzt.

Der thermisch vulkanisierbare, schmelzbare, vorzugsweise haftklebrige Klebstoff der vorliegenden Erfindung wird bevorzugt als Schicht zur Herstellung eines thermisch vulkanisierbaren, vorzugsweise haftklebrigen Klebebandes oder Dichtungsbandes, sowie daraus hergestellter Formkörper oder Stanzlinge verwendet, wobei das thermisch vulkanisierbare, schmelzbare, vorzugsweise haftklebrige Klebeband oder Dichtungsband zusätzliche haftklebrige und/ oder nicht haftklebrige Schichten, Trägerfolien oder -filme, haftvermittelnde Schichten, Release-Schichten oder sonstige Funktionsschichten sowie auch mehrere thermisch vulkanisierbare oder auf andere Art härt- oder vernetzbare Klebebandschichten enthalten kann und mit einem Trennliner ausgerüstet sein kann, der ein- oder beidseitig silikonisiert sein kann.

Der erfindungsgemäße, thermisch vulkanisierbare, schmelzbare, vorzugsweise haftklebrige Klebstoff sowie daraus hergestellte Haftklebebänder zeigen eine hervorragende Kombination von Produkteigenschaften, die auch für den Fachmann derartig nicht vorherzusehen waren.

Bei Raumtemperatur bis hin zu ungefähr 30 °C ist der Klebstoff genügend fest beziehungsweise hochviskos, so dass er als auf einen Trennliner oder als auf ein Trägermaterial beschichteter Film zu einer Rolle aufgewickelt werden kann, ohne dass er an der Seite herausfließt beziehungsweise durch den Wickeldruck herausgequetscht wird.

Der Klebstoff beziehungsweise ein daraus hergestelltes Klebeband erweist sich als sehr lagerstabil im Temperaturbereich von Raumtemperatur bis ungefähr 40 °C. Er muss nicht gekühlt gelagert werden, was einen großen Vorteil darstellt. Die Lagerstabilität erstreckt sich auf einen Zeitraum von mindestens einem Jahr.

Optionale Epoxidharze können besondere Vorteile bringen. Durch den Zusatz eines oder mehrerer Epoxidharze kann eine Verbesserung der Haftungseigenschaften, insbesondere auf manchen geölten Blechsorten nach der thermischen Vulkanisationsreaktion erzielt werden.

Durch den optionalen Zusatz von Bitumen kann die Ölaufnahme verbessert werden, so dass es auch bei Verklebungen von stark beölten Blechen im Zugscherversuch zu kohäsiven Bruchbildern kommt.

Der optionale Zusatz von Klebrigmacherharzen hat sich insbesondere im Hinblick auf die Haftungseigenschaften des thermisch vulkanisierbaren, schmelzbaren, vorzugsweise haftklebrigen Klebstoffes auf geölten Blechen vor der thermischen Vulkanisationsreaktion als vorteilhaft herausgestellt. Die Klebkraft des noch nicht vulkanisierten Klebstoffes auf geölten Blechen kann so signifikant erhöht werden. Dies gilt besonders vorteilhaft für den Zusatz von β-Pinen-Harzen.

Füllstoffe können überraschenderweise positiv zur Erhöhung der Klebfestigkeit beitragen. Insbesondere Mischungen aus Calciumcarbonat und Calciumoxid haben als besonders vorteilhaft im Hinblick auf das Erzielen hoher Klebfestigkeiten und der Minimierung einer gelegentlichen Bläschenbildung während der thermischen Vulkanisation erwiesen. Auf diese Weise konnten bei unveränderter Schwefelkonzentration die Zugscherfestigkeiten signifikant gesteigert werden. Auch Talkum hat sich in dieser Hinsicht als vorteilhaft herausgestellt.

In Tabelle 1 sind die zur Herstellung des Polybutadien-Polyurethans verwendeten Basismaterialien (Rohstoffe) aufgeführt, und zwar jeweils mit Handelsnamen, Hersteller und den für diese Erfindung relevanten technischen Daten.

In Tabelle 2 sind die für die daraus hergestellten erfindungsgemäßen Klebstoffe und Klebebandschichten zusätzlich verwendeten Basismaterialien (Rohstoffe) aufgeführt. Die genannten Rohstoffe sind alle frei im Handel erhältlich.

| Handelsname | Beschreibung | mittlere zahlenge-mittelte Molmasse $M_n$ (g/mol) | OH-beziehungswe ise NCO-Zahl (mmol OH/kg beziehungswe ise mmol NCO/kg | Mittlere, zahlen-gemittelte Funktio-nalität f | Hersteller / Lieferant |
|---|---|---|---|---|---|
| **Polybutadien-Polyole** | | | | | |
| Krasol LBH 2000 ® | Polybutadien-Diol | 2100 | 910 | 1,9 | Cray Valley |
| Poly bd R-45 HTLO ® | Polybutadien-Polyol, f größer 2 | 2800 | 840 | 2,4 | Cray Valley |
| **Polyether-Polyole** | | | | | |
| Voranol P 2000L ® | Polypropylenglykol, Diol | 2000 | 989 | 2,0 | Dow |
| **Kettenverlängerer** | | | | | |
| 2-Ethyl-1,3-hexandiol (EHD) | CAS-Nr.: 94-96-2, Diol | 146,2 | 13679,8 | 2,0 | Sigma-Aldrich |
| **Diisocyanate** | | | | | |
| Vestanat IPDI ® | Isophorondiisocyanat (IPDI), CAS-Nr.: 4098-71-9 | 222,3 | 8998 | 2,0 | Degussa |
| Desmodur W ® | Dicyclohexylmethandiiso-cyanat (HMDI), CAS-Nr.: 5124-30-1 | 262 | 7571 | 2,0 | Bayer |
| 4,4'-Methylen-bis-(phenylisocyanat) | MDI, CAS-Nr.: 101-68-8 | 250,25 | 7992 | 2,0 | Sigma-Aldrich |
| **Katalysator** | | | | | |
| Coscat 83 ® | Bismuttrisneodecanoat CAS-Nr.: 34364-26-6 | | | | Caschem |
| **Epoxidharze** | | | | | |
| Epikote 828 ® | Reaktionsprodukt aus Bisphenol-A und Epichlorhydrin CAS-Nr.: 25068-38-6 | | | | Brenntag |
| 3,4-Epoxycyclohexylmethyl-3',4'-epoxycyclohexancarboxylat | CAS-Nr.: 2386-87-0 | | | | Sigma-Aldrich |
| **Weichmacher** | | | | | |
| Gravex 925 ® | Naphthenisches Fabrikationsöl | | | | Shell |
| **Bitumen** | | | | | |
| Azalt 50/70 DE ® | Straßenbaubitumen nach DIN EN 12591, Tabelle 1, Erweichungspunkt: 46-54°C | | | | Total |

Tabelle 1: Zur Herstellung des Polybutadien-Polyurethans sowie zur Herstellung der Vergleichsbeispiele verwendete Basismaterialien (Rohstoffe)

| Handelsname | Beschreibung | Hersteller / Lieferant |
|---|---|---|
| **Vulkanisationsstoffe und -beschleuniger** | | |
| Mahlschwefel 80/90° | Löslicher Mahlschwefel, CAS-Nr.: 7704-34-9 | Avokal GmbH |
| MBTS | Di(benzothiazyl)disulfid, CAS-Nr.: 120-78-5 | Weber & Schaer GmbH |
| ZBEC | Zink-bis(dibenzyldithiocarbamat), CAS-Nr.: 14726-36-4 | Weber & Schaer GmbH |
| TBzTD | Tetrabenzylthiuramdisulfid, CAS-Nr.: 10591-85-2 | Weber & Schaer GmbH |
| **Ruße** | | |
| Luvomaxx N 220 ® | Perlruß | Lehmann & Voss |
| Printex 60 ® | Furnace-Ruß, Oil-Absorption-No: 118, BET-Oberfläche: 115 | Orion Engineered Carbons GmbH |
| **Füllstoffe** | | |
| Talkum Pharma M ® | Talkum, CAS-Nr.: 14807-96-6, spez. Oberfläche: 4,6 m²/g | Scheruhn GmbH |
| Omyacarb 5-GU® | Gemahlene Kreide, mittlerer Teilchendurchmesser: 5,5 µm | Omya |
| Rapidquell® Quicklime CL 90-Q | Calciumoxid, Siebrückstand > 90µm: 3 Masse-% | Rheinkalk GmbH |
| **Klebrigmacherharze** | | |
| Dercolyte S115® | Beta-Pinenharz | DRT |
| Wingtack® 10 | C-5-Harz | Cray Valley |

Tabelle 2: Zur Herstellung der erfindungsgemäßen Klebstoffe und Klebebandschichten aus den Polybutadien-Polyurethanen verwendete Basismaterialien (Rohstoffe)

Das gewichtsmittlere Molekulargewicht $M_w$ und die mittlere zahlengemittelte Molmasse $M_n$ werden dabei mittels Gelpermeationschromatographie (GPC) bestimmt. Als Eluent wird THF mit 0,1 Vol.-% Trifluoressigsäure eingesetzt. Die Messung erfolgt bei 25 °C. Als Vorsäule wird PSS-SDV, 5 $\mu$, $10^3$ Å, ID 8,0 mm x 50 mm verwendet. Zur Auftrennung werden die Säulen PSS-SDV, 5 $\mu$, $10^3$ Å sowie $10^5$ Å und $10^6$ Å mit jeweils ID 8,0 mm x 300 mm eingesetzt. Die Probenkonzentration beträgt 4 g/l, die Durchflussmenge 1,0 ml pro Minute. Es wird gegen PMMA Standards gemessen. ($\mu$ = $\mu$m; 1 Å = $10^{-10}$ m).

Anhand des folgenden Beispiels soll die Erfindung näher beschrieben werden.

**Beispiel**

Herstellung des Klebstoffs:

Zur Herstellung des Klebstoffs wurde eine Mischung PBD-PU 3 (inklusive Epoxidharz) verwendet. Dazu wurde PBD-PU 3 (inklusive Epoxidharz) gemäß der folgenden Rezeptur im ersten Planetwalzenextruder (PWE) weiter abgemischt. Ziel war eine Absenkung der Prozesstemperatur, um eine Gefahr einer vorzeitigen Vernetzung insbesondere bei erhöhten Ultrabeschleunigeranteilen abzumindern. Weiterhin kann sich eine Absenkung der Prozesstemperatur positiv auf den erzielbaren Durchsatz oder die maximal mögliche Extruderdrehzahl auswirken. Erhöhte Drehzahler erhöhen die Scherrate und können somit die Dispergierung von Zuschlagstoffen verbessern.

Die chemische Umsetzung zum Polybutadien-Polyurethan erfolgte in Gegenwart eines Epoxidharzes. Das Polybutadien-Polyurethan (PBD-PU 3) setzt sich inklusive des Epoxidharzes wie folgt zusammen:
Zusammensetzung PBD-PU 3:

| Rohstoff | Gewichtsanteil [Gew.-%] | Anzahl der eingebrachten OH- beziehungsweise NCO-Gruppen, bezogen auf den prozentualen Gewichtsanteil | Prozentuales Verhältnis der Anzahl der OH- Gruppen zueinander |
|---|---|---|---|
| Krasol LBH 2000 ® | 61,67 | 56,12 mmol OH | 50 |
| 2-Ethyl-1,3-hexandiol ® | 4,10 | 56,12 mmol OH | 50 |
| Coscat 83 ® | 0,15 | | |
| Desmodur W ® | 14,08 | 106,62 mmol NCO | |
| Epikote 828 ® | 20,00 | | |
| Summe | 100,00 | | |

In der folgenden Tabelle ist das bereits während der Polybutadien-Polyurethan-Herstellung eingemischte Epoxidharz wieder separat aufgeführt.

Zusammensetzung der thermisch vulanisierbaren Klebebandschicht auf Basis von PBD-PU 3:

| Rohstoff | Gewichtsprozent |
|---|---|
| PBD-PU 3 (exklusive Epoxidharz) | 44,8 |
| Epikote 828 ® (aus der PBD-PU 3- Herstellung) | 11,3 |
| Mahlschwefel 80/90° | 3,5 |
| ZBEC | 1,0 |
| TBzTD | 1,0 |
| Levanyl ® | 0,9 |
| Omyacarb 5-GU® | 26,1 |
| Rapidquell® Quicklime CL 90-Q | 3,5 |
| Talkum Pharma M ® | 7,9 |

Im Planetwalzenextruder wurden die pulverförmigen Feststoffe wie Talkum, Kreide, Kalk (Calciumoxid), Schwefel und ein Ultrabeschleuniger-Premix rezepturabhängig in die PU-Basis eingearbeitet werden. Die Rußkomponente wurde in dem nachgeschalteten Entgasungsplanetwalzenextruder eingebracht, in dem auch eine Entgasung vorgenommen wurde.

Die plastifizierten Polymere wurden dabei über eine Fassschmelze und Zwangseinspeisung in den Extruder (Typ Entex PWE, vierschüssig, Durchmesser 70 mm, bestückt mit Standardspindeln: 7, 7, 6, 6 je Schuss) eingespeist (Polymer-schmelze-Temperatur 85 °C). Der Durchsatz betrug 50 kg/h, die Drehzahl 110 1/min). Es zeigte sich, dass die verringerte Spindelbestückung der beiden letzten Schüsse für eine geringe Prozesstemperatur vorteilhaft ist.

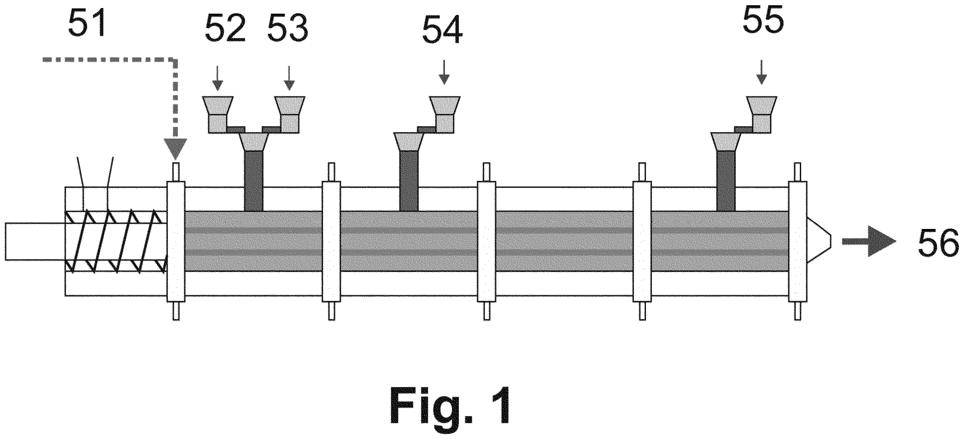

Um die Dosiererkomplexität zu reduzieren, wurden Premixe für Talkum und Kalk (P1) sowie für die Ultrabeschleuniger ZBEC und TBzTD (P2) angefertigt. Kreide und Schwefel wurden separat in den ersten Schuss des Planetwalzenextruders eingebracht, ebenso P1. P2 wurde in dem zweiten Schuss eindosiert. Figur 1 zeigt den Aufbau.

Die vier Walzenzylinder wurden auf 70/50/35/35 °C abfallend und die Zentralspindel auf 20 °C temperiert. Die Schmelzetemperatur unmittelbar hinter dem PWE wurde mit 76 °C bestimmt.

Über eine mit 70 °C temperierte Schmelzepumpe und über einen nachfolgenden, ebenfalls mit 70 °C temperierten Schmelzeschlauch wurde das Compound in den Entgasungsplanetwalzenextruder überführt.

Die drei Walzenzylinder wurden ebenso wie die Zentralspindel auf 40 °C temperiert. Die Austrittstemperatur unmittelbar hinter dem Entgasungsplanetwalzenextruder wurde mit 70 °C bestimmt.

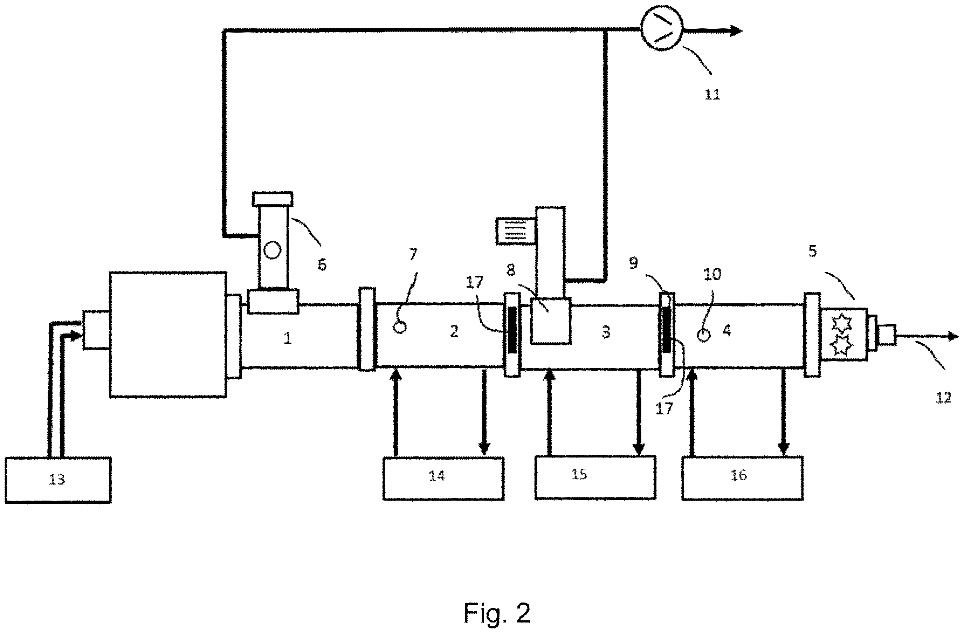

Figur 2 zeigt diesen Anlagenteil schematisch.

Bei dem Verfahren, wie es aus der WO 2018/059931 A1 bekannt ist, wurde statt eines Entgasungsplanetwalzenextruders ein Doppelschneckenextruder zur Entgasung eingesetzt. Bei einer Drehzahl von 120 1/min wurden die Einzelzonen dort auf 50 °C vorgewählt. Der Niederhalter im Entgasungsbereich lief mit 250 1/min. Die Austrittstemperatur betrug etwa 85 °C.

Das Beispiel zeigt, dass sich mit der bevorzugten Verwendung eines Entgasungsplanetwalzenextruders vorteilhaft die Prozesstemperaturen weiter absenken lassen.

Legende zu den Figuren

Figur 1: Erster Planetwalzenextruder

51) Eingabe Polybutadien-Polyurethan
52) Einlass Schwefel, Kreide
53) Einlass Premix Ultrabeschleuniger (ZBEC / TBzTD)
54) Einlass Premix Talkum & Kalk
55): Einlass
56): Auslass Compound

Figur 2: Entgasungsplanetwalzenextruder

1) Füllteil mit Einschnecke
2) Walzenzylinder 1
3) Walzenzylinder 2
4) Walzenzylinder 3
5) Schmelzepumpe für Produktaustrag
6) Rückwärtige Vakuumentgasung über Füllteil
7) Zugabeöffnung für die plastifizierten Polymere
8) Öffnung im Walzenzylinder zur Vakuumentgasung mit Produktniederhaltewerk (Entgasung (< 0,1 bar))
9) Zugabeöffnung im Zwischenring für Flüssigkeiten (Zuführung Rußdispersion)
10) Zugabeöffnung im Walzenzylinder für Flüssigkeiten
11) Vakuumpumpe
12) Produktaustritt
13) Temperierkreis für Zentralspindel
14) Temperierkreis für Walzenzylinder 1
15) Temperierkreis für Walzenzylinder 2
16) Temperierkreis für Walzenzylinder 3
17) Zwischenring

**Patentansprüche**

1. Verfahren zur Herstellung eines vorzugsweise haftklebrigen Klebstoffs unter Verwendung eines ersten Planetwalzenextruders und eines stromab angeordneten zweiten Entgasungsplanetwalzenextruders, wobei

a) der erste Planetwalzenextruder aus einer atmosphärisch betriebenen Füll- und Dispergierzone aus mindestens einem Walzenzylinder besteht,
b) die die thermisch vulkanisierbaren, schmelzbaren, vorzugsweise haftklebrigen Klebstoff bildenden Polymere dem Planetwalzenextruder in einem plastifizierten Zustand zugeführt werden,
c) die plastifizierten Polymere in den mindestens einen Walzenzylinder der Füll- und Dispergierzone eingespeist werden, und zwar innerhalb des ersten Drittels des Walzenzylinders,

d) stromab der Zugabe von den plastifizierten Polymeren in der Füll- und Dispergierzone den plastifizierten Polymeren, insbesondere mit Hilfe eines Seitenschnecken-Dosierers, über eine Öffnung des mindestens einen Walzenzylinders Feststoffe wie thermische Vernetzer zugegeben werden,

e) die Feststoffe in der Füll- und Dispergierzone in den plastifizierten Polymeren dispergiert werden,

f) die Feststoffe zumindest thermische Vernetzer enthalten, die die plastifizierten Polymere zum Zwecke eines Molmassenanstiegs der Polymere vernetzen können,

g) die Vorlauftemperaturen der Zentralspindel und des mindestens einen Walzenzylinders innerhalb der Füll- und Dispergierzone so eingestellt sind, dass es zu keiner Vergelung der mit den thermischen Vernetzern abgemischten plastifizierten Polymeren kommt,

h) die Mischung aus plastifizierten Polymeren und Feststoffen, bevorzugt thermischen Vernetzern einem zweiten Entgasungsplanetwalzenextruders zugeführt wird, weiter vorzugsweise inline,

i) der zweite Entgasungsplanetwalzenextruder aus einer Entgasungszone aus mindestens einem Walzenzylinder besteht,

j) die Mischung aus plastifizierten Polymeren und Feststoffen, bevorzugt thermischen Vernetzern in dem Entgasungsplanetwalzenextruder entgast wird,

k) die entgaste Mischung aus plastifizierten Polymeren und Feststoffen, bevorzugt thermischen Vernetzern einem Beschichtungsaggregat zugeführt wird, weiter vorzugsweise inline.

2. Verfahren nach Anspruch 1,
**dadurch gekennzeichnet, dass**
die Füll- und Dispergierzone aus vorzugsweise mindestens zwei, vorzugsweise vier gekoppelten Walzenzylindern besteht, die über einen verzahnten Zwischenring miteinander verbunden sind.

3. Verfahren nach Anspruch 1 oder 2,
**dadurch gekennzeichnet, dass**
die Planetenspindeln des ersten Walzenzylinders der Füll- und Dispergierzone sowie die Planetenspindeln des zweiten Entgasungsplanetwalzenextruders über jeweils eine gemeinsame Zentralspindel angetrieben werden.

4. Verfahren nach zumindest einem der Ansprüche 1 bis 3,
**dadurch gekennzeichnet, dass**
der mindestens eine Walzenzylinder, insbesondere alle Walzenzylinder der Füll- und Dispergierzone des ersten Planetwalzenextruders mit einer Anzahl von Planetenspindeln bestückt sind, die mehr als 70 %, vorzugsweise mehr als 80 % der maximal möglichen Planetspindelanzahl ausmacht.

5. Verfahren nach zumindest einem der vorherigen Ansprüche,
**dadurch gekennzeichnet, dass**
der mindestens eine Walzenzylinder des zweiten Planetwalzenextruders, insbesondere alle Walzenzylinder der Entgasungszone mit einer Anzahl von Planetenspindeln bestückt sind, die weniger als 75 %, vorzugsweise weniger als 60 % der maximal möglichen Planetspindelanzahl ausmacht.

6. Verfahren nach zumindest einem der vorherigen Ansprüche,
**dadurch gekennzeichnet, dass**
der mindestens eine Walzenzylinder, insbesondere alle Walzenzylinder der Füll- und Dispergierzone mit einer Anzahl von Planetenspindeln bestückt sind, die mehr als 70 %, vorzugsweise mehr als 80 % der maximal möglichen Planetspindelanzahl ausmacht und der mindestens eine Walzenzylinder, insbesondere alle Walzenzylinder der Entgasungszone mit einer Anzahl von Planetenspindeln bestückt sind, die weniger als 75 %, vorzugsweise weniger als 60 % der maximal möglichen Planetspindelanzahl ausmacht.

7. Verfahren nach zumindest einem der vorherigen Ansprüche,
**dadurch gekennzeichnet, dass**
der Walzenzylinderbereich der Entgasungszone aus mindestens zwei, weiter vorzugsweise genau drei oder vier gekoppelten Walzenzylindern besteht, die über einen verzahnten Zwischenring miteinander verbunden sind und die jeweils über mindestens eine Öffnung im Mantel verfügen.

8. Verfahren nach zumindest einem der vorherigen Ansprüche,
**dadurch gekennzeichnet, dass**
stromauf vor dem ersten Planetwalzenextruder ein Einschnecken-Förderteil vorgesehen ist.

**9.** Verfahren nach zumindest einem der vorherigen Ansprüche,
**dadurch gekennzeichnet, dass**

die Einspeisung der plastifizierten Polymere in den Planetwalzenextruder durch eine Öffnung in der Wandung des ersten Walzenzylindermantels erfolgt oder
über einen Zwischenring, der sich zwischen Füllteil und erstem Walzenzylinder befindet und der zum Zwecke der Einspeisung der plastifizierten Polymere über mindestens eine radiale Bohrung verfügt.

**10.** Verfahren nach zumindest einem der vorherigen Ansprüche,
**dadurch gekennzeichnet, dass**
die Einspeisung der plastifizierten Polymere in den Planetwalzenextruder mittels einer Schmelzepumpe, mittels eines Ein- oder Mehrwellenextruders oder mittels einer Fass- oder Tankschmelzeinheit erfolgt.

**11.** Verfahren nach zumindest einem der vorherigen Ansprüche,
**dadurch gekennzeichnet, dass**
der Austritt der thermisch sensitiven Polymermischung aus dem Planetwalzenextruder mittels einer am Ende des letzten Walzenzylinderbereiches gekoppelten Schmelzepumpe erfolgt.

**12.** Verfahren nach zumindest einem der vorherigen Ansprüche,
**dadurch gekennzeichnet, dass**
das Beschichtungsaggregat ein Kalander oder eine Düse ist, durch den beziehungsweise durch die die Mischung auf ein Trägermaterial aufgebracht wird.

**13.** Verfahren nach zumindest einem der vorherigen Ansprüche,
**dadurch gekennzeichnet, dass**
es sich bei den plastifizierten Polymeren um Polymere aus der Gruppe der nicht-thermoplastischen Elastomere, der thermoplastischen Synthesekautschuke, der Polyacrylate, der Polyurethane, der Polyepoxide sowie Mischungen in beliebigen Verhältnissen hieraus handelt.

**14.** Verfahren nach zumindest einem der vorherigen Ansprüche,
**dadurch gekennzeichnet, dass**
die plastifizierten Polymere mit beispielsweise klebrig machenden Harzen, Füllstoffen, Weichmachern, Ölen, Thixotropiermitteln und gegebenenfalls weiteren Zuschlagstoffen abgemischt sind.

**15.** Verfahren nach zumindest einem der vorherigen Ansprüche,
**dadurch gekennzeichnet, dass**
es sich bei der aus dem Planetwalzenextruder kommenden Mischung um eine Selbsthaftklebemassen oder um eine aushärtbare Strukturklebemasse handelt.

**Claims**

**1.** Method for producing a preferably pressure-sensitive adhesive using a first planetary roller extruder and a downstream second venting planetary roller extruder, where

a) the first planetary roller extruder consists of a filling and dispersing zone operated atmospherically and comprising at least one roller cylinder,
b) the polymers which form the thermally vulcanizable, meltable, preferably pressure-sensitive adhesive are supplied to the planetary roller extruder in a plastified state,
c) the plastified polymers are fed into the at least one roller cylinder of the filling and dispersing zone, and specifically within the first third of the roller cylinder,
d) solids such as thermal crosslinkers are added to the plastified polymers downstream of the addition of the plastified polymers in the filling and dispersing zone, in particular by means of a lateral screw feeder, via an opening of the at least one roller cylinder,
e) the solids are dispersed in the plastified polymers in the filling and dispersing zone,
f) the solids comprise at least thermal crosslinkers which are able to crosslink the plastified polymers for the purpose of increasing the molar mass of the polymers,
g) the initial temperatures of the central spindle and of the at least one roller cylinder within the filling and dispersing zone are established such that there is no gelling of the plastified polymers blended with the thermal crosslinkers,

h) the mixture of plastified polymers and solids, preferably thermal crosslinkers, is supplied, more preferably in-line, to a second venting planetary roller extruder,

i) the second venting planetary roller extruder consists of a venting zone composed of at least one roller cylinder,

j) the mixture of plastified polymers and solids, preferably thermal crosslinkers, is vented in the venting planetary roller extruder,

k) the vented mixture of plastified polymers and solids, preferably thermal crosslinkers, is supplied, more preferably in-line, to a coating assembly.

2. Method according to Claim 1,
   **characterized in that**
   the filling and dispersing zone consists of preferably at least two, preferably four, coupled roller cylinders connected to one another via a geared intermediate ring.

3. Method according to Claim 1 or 2,
   **characterized in that**
   the planetary spindles of the first roller cylinder of the filling and dispersing zone and also the planetary spindles of the second venting planetary roller extruder are driven respectively via a common central spindle.

4. Method according to at least one of Claims 1 to 3,
   **characterized in that**
   the at least one roller cylinder and more particularly all the roller cylinders of the filling and dispersing zone of the first planetary roller extruder are fitted with a number of planetary spindles which is more than 70%, preferably more than 80%, of the maximum possible number of planetary spindles.

5. Method according to at least one of the preceding claims,
   **characterized in that**
   the at least one roller cylinder of the second planetary roller extruder, and more particularly all the roller cylinders of the venting zone, are fitted with a number of planetary spindles which is less than 75%, preferably less than 60%, of the maximum possible number of planetary spindles.

6. Method according to at least one of the preceding claims,
   **characterized in that**
   the at least one roller cylinder and more particularly all the roller cylinders of the filling and dispersing zone are fitted with a number of planetary spindles which is more than 70%, preferably more than 80%, of the maximum possible number of planetary spindles, and the at least one roller cylinder and more particularly all the roller cylinders of the venting zone are fitted with a number of planetary spindles which is less than 75%, preferably less than 60%, of the maximum possible number of planetary spindles.

7. Method according to at least one of the preceding claims,
   **characterized in that**
   the roller cylinder region of the venting zone consists of at least two, more preferably exactly three or four, coupled roller cylinders which are connected to one another via a geared intermediate ring and each possess at least one opening in the casing.

8. Method according to at least one of the preceding claims,
   **characterized in that**
   a single-screw conveying section is provided upstream of the first planetary roller extruder.

9. Method according to at least one of the preceding claims,
   **characterized in that**

   the plastified polymers are fed into the planetary roller extruder through an opening in the wall of the first roller cylinder casing or
   via an intermediate ring which is located between filling section and first roller cylinder and which possesses at least one radial hole for the purpose of feeding of the plastified polymers.

**10.** Method according to at least one of the preceding claims,
**characterized in that**
the plastified polymers are fed into the planetary roller extruder by means of a melt pump, by means of a single-screw or multi-screw extruder or by means of a drum or tank melting unit.

**11.** Method according to at least one of the preceding claims,
**characterized in that**
the thermally sensitive polymer mixture emerges from the planetary roller extruder by means of a melt pump coupled at the end of the last roller cylinder region.

**12.** Method according to at least one of the preceding claims,
**characterized in that**
the coating assembly is a calender or a die through which the mixture is applied to a carrier material.

**13.** Method according to at least one of the preceding claims,
**characterized in that**
the plastified polymers are polymers from the group of non-thermoplastic elastomers, thermoplastic synthetic rubbers, polyacrylates, polyurethanes, polyepoxides and mixtures in any ratios thereof.

**14.** Method according to at least one of the preceding claims,
**characterized in that**
the plastified polymers are blended with, for example, tackifying resins, fillers, plasticizers, oils, thixotropic agents and optionally further adjuvants.

**15.** Method according to at least one of the preceding claims,
**characterized in that**
the mixture emerging from the planetary roller extruder is a self-adhesive compound or is a curable structural adhesive compound.


## Revendications

**1.** Procédé de fabrication d'un adhésif de préférence de contact, par utilisation d'une première extrudeuse planétaire et d'une deuxième extrudeuse planétaire à dégazage installée en aval, dans lequel

a) la première extrudeuse planétaire est constituée d'une zone de remplissage et de dispersion sous pression atmosphérique, constituée d'au moins un cylindre à rouleaux,
b) les polymères thermiquement vulcanisables, fusibles, de préférence formant un adhésif de contact, sont envoyés à l'extrudeuse planétaire dans un état plastifié,
c) les polymères plastifiés sont introduits dans l'au moins un cylindre à rouleaux de la zone de remplissage et de dispersion, et plus précisément dans le premier tiers du cylindre à rouleaux,
d) en aval de l'introduction des polymères plastifiés dans la zone de remplissage et de dispersion, on ajoute des solides, tels que des réticulants thermiques, aux polymères plastifiés, en particulier à l'aide d'une doseuse à vis latérale, par une ouverture de l'au moins un cylindre à rouleaux,
e) les solides se trouvant dans la zone de remplissage et de dispersion sont dispersés dans les polymères plastifiés,
f) les solides contiennent au moins des réticulants thermiques, qui peuvent réticuler les polymères plastifiés pour augmenter la masse moléculaire des polymères,
g) on ajuste les températures de tête de la broche centrale et de l'au moins un cylindre à rouleaux à l'intérieur de la zone de remplissage et de dispersion de façon qu'il ne se produise aucune gélification des polymères plastifiés mélangés aux réticulants thermiques,
h) on envoie, de préférence en continu, le mélange des polymères plastifiés et des solides, de préférence des réticulants thermiques, dans une deuxième extrudeuse planétaire à dégazage,
i) la deuxième extrudeuse planétaire à dégazage est constituée d'une zone de dégazage constituée d'au moins un cylindre à rouleaux,
j) le mélange de polymères plastifiés et de solides, de préférence de réticulants thermiques, est dégazé dans une extrudeuse planétaire à dégazage,
k) le mélange dégazé de polymères plastifiés et de solides, de préférence de réticulants thermiques, est envoyé à un équipement de revêtement, de préférence en continu.

2. Procédé selon la revendication 1, **caractérisé en ce que** la zone de remplissage et de dispersion est constituée d'au moins deux, de préférence quatre cylindre à rouleaux à rouleaux couplés, qui sont reliés les uns aux autres par une bague intermédiaire crantée.

3. Procédé selon la revendication 1 ou 2, **caractérisé en ce que** les broches planétaires du premier cylindre à rouleaux de la zone de remplissage et de dispersion, ainsi que les broches planétaires de la deuxième extrudeuse planétaire à dégazage, sont chacune entraînées par une broche centrale commune.

4. Procédé selon au moins l'une des revendications 1 à 3, **caractérisé en ce que** l'au moins un cylindre à rouleaux, en particulier tous les cylindre à rouleaux à rouleaux de la zone de remplissage et de dispersion de la première extrudeuse planétaire sont garnis d'un certain nombre de broches planétaires, qui représente plus de 70 %, de préférence plus de 80 % du nombre maximal possible de broches planétaires.

5. Procédé selon au moins l'une des revendications précédentes, **caractérisé en ce que** l'au moins un cylindre à rouleaux de la deuxième extrudeuse planétaire, en particulier tous les cylindre à rouleaux à rouleaux de la zone de dégazage, sont garnis d'un certain nombre de broches planétaires, qui représente moins de 75 %, de préférence moins de 60 % du nombre maximal possible de broches planétaires.

6. Procédé selon au moins l'une des revendications précédentes, **caractérisé en ce que** l'au moins un cylindre à rouleaux, de préférence tous les cylindre à rouleaux à rouleaux de la zone de remplissage et de dispersion, sont garnis d'un certain nombre de broches planétaires, qui représente plus de 70 %, de préférence plus de 80 % du nombre maximal possible de broches planétaires, et l'au moins un cylindre à rouleaux, en particulier tous les cylindre à rouleaux à rouleaux de la zone de dégazage sont garnis d'un certain nombre de broches planétaires, qui représente moins de 75 %, de préférence moins de 60 % du nombre maximal possible de broches planétaires.

7. Procédé selon au moins l'une des revendications précédentes, **caractérisé en ce que** la zone des cylindre à rouleaux à rouleaux de la zone de dégazage est constituée d'au moins deux, de plus de préférence d'exactement trois ou quatre cylindre à rouleaux à rouleaux couplés, qui sont reliés les uns aux autres par une bague intermédiaire crantée, et qui chacun dispose d'au moins une ouverture dans sa chemise.

8. Procédé selon au moins l'une des revendications précédentes, **caractérisé en ce qu'**il est prévu, en amont de la première extrudeuse planétaire, une partie alimentation monovis.

9. Procédé selon au moins l'une des revendications précédentes, **caractérisé en ce que** l'introduction des polymères plastifiés dans l'extrudeuse planétaire a lieu par une ouverture dans la paroi de la première chemise de cylindre à rouleaux, ou par une bague intermédiaire qui se trouve entre la partie remplissage et le premier cylindre à rouleaux et qui, pour permettre l'introduction des polymères plastifiés, dispose d'au moins d'un trou radial.

10. Procédé selon au moins l'une des revendications précédentes, **caractérisé en ce que** l'introduction des polymères plastifiés dans l'extrudeuse planétaire s'effectue à l'aide d'une pompe à masse fondue, à l'aide d'une extrudeuse à un ou plusieurs arbres, ou à l'aide d'un applicateur de fusion ou d'un vide-fût.

11. Procédé selon au moins l'une des revendications précédentes, **caractérisé en ce que** l'évacuation du mélange polymère thermiquement sensible de l'extrudeuse planétaire a lieu à l'aide d'une pompe à masse fondue couplée à l'extrémité de la dernière zone de cylindre à rouleaux.

12. Procédé selon au moins l'une des revendications précédentes, **caractérisé en ce que** l'équipement de revêtement est une calandre ou une buse, par lequel ou par laquelle le mélange est appliqué sur un matériau support.

13. Procédé selon au moins l'une des revendications précédentes, **caractérisé en ce que** les polymères plastifiés sont des polymères du groupe des élastomères non thermoplastiques, des caoutchoucs de synthèse thermoplastiques, des polyacrylates, des polyuréthanes, des polyépoxydes ainsi que des mélanges de ceux-ci selon des proportions quelconques.

14. Procédé selon au moins l'une des revendications précédentes, **caractérisé en ce que** les polymères plastifiés sont mélangés par exemple à des résines de pégosité, des charges, des plastifiants, des huiles, des agents thixotropiques et éventuellement d'autres adjuvants.

15. Procédé selon au moins l'une des revendications précédentes, **caractérisé en ce que** le mélange sortant de l'extrudeuse planétaire est une masse auto-adhésive de contact ou une masse d'adhésif structural durcissable.

**Fig. 1**

EP 3 790 718 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19856235 A1
- DE 102008004388 A1
- DE 102010062669 A1
- DE 102013224774 A1
- DE 102012212883 A1
- WO 2018059931 A1


**In der Beschreibung aufgeführte Nicht-Patentliteratur**

- **DONATAS SATAS.** Handbook of Pressure Sensitive Adhesive Technology. 1999, 153-203
- **WERNER HOFFMANN ; HEINZ GUPTA.** Handbuch der Kautschuk-Technologie. 2001
- *CHEMICAL ABSTRACTS,* 25068-38-6
- *CHEMICAL ABSTRACTS,* 2386-87-0
- Ullmann's Encyclopedia of Industrial Chemistry. vol. 12, 271
- *Encyclopedia of Polymer Science and Engineering,* vol. 6, 345
- *CHEMICAL ABSTRACTS,* 9011-11-4
- *CHEMICAL ABSTRACTS,* 25719-60-2
- **GAECHTER ; MÜLLER.** Taschenbuch der Kunststoff-Additive, München. 1979
- *Encycl. Polym. Sci. Technol.,* vol. 14, 125-148
- *CHEMICAL ABSTRACTS,* 003077-13-2
- *CHEMICAL ABSTRACTS,* 144-19-4
- *CHEMICAL ABSTRACTS,* 115-84-4
- *CHEMICAL ABSTRACTS,* 94-96-2
- *CHEMICAL ABSTRACTS,* 4098-71-9
- *CHEMICAL ABSTRACTS,* 5124-30-1
- *CHEMICAL ABSTRACTS,* 34364-26-6